# EUROPEAN PATENT APPLICATION

(11) **EP 4 478 591 A2**
(43) Date of publication of application: **18.12.2024**
(21) Application number: 24178080.8
(22) Date of filing: 24.05.2024
(51) Int. Cl.: H02K 29/08

(54) **POWER TOOL INCLUDING A HIGH SPEED MOTOR**

(30) Priority: 26.05.2023 US 202363504469 P
(71) Applicant: Milwaukee Electric Tool Corporation, Brookfield, WI 53005 (US)
(72) Inventor: PAULSEN, Alexander J, Shorewood, 53211 (US); HANKINS, Nathan D, Calendonia, 53108 (US); YPMA, Carter H, Milwaukee, 53227 (US); BOTHE, Erik P, Pewaukee, 53072 (US); WOOD, Jacob G, Waukesha, 53186 (US)
(74) Representative: Forresters IP LLP

(57) **Abstract**

A power tool including a housing, a battery pack interface configured to receive a battery pack, and electric motor within the housing, a controller, and a Hall effect sensor. The electric motor has a no-load operating speed of at least 35,000 rotations per minute ("RPM"). The electric motor includes a stator including a stator core having stator teeth and stator laminations, and a rotor including a rotor shaft and a rotor magnet. The controller is configured to control an operating speed of the electric motor. The Hall effect sensor is connected to the controller and is configured to transition between a low-level output signal and a high-level output signal in response to sensing the rotor magnet. The Hall effect sensor is configured to transition between the low-level output signal and the high-level output signal at a maximum transition time of less than a millisecond.

## Description

### RELATED APPLICATIONS

This application claims the benefit of U.S. Provisional Patent Application No. 63/504,469, filed May 26, 2023, the entire content of which is hereby incorporated by reference.

### FIELD

Embodiments described herein relate to a motor for a power tool.

### SUMMARY

Embodiments described herein provide a power tool that includes a high speed motor.

Power tools described herein include a housing, a battery pack interface configured to receive a battery pack, and electric motor within the housing, a controller, and a Hall effect sensor. The electric motor has a no-load operating speed of at least 35,000 rotations per minute ("RPM"). The electric motor includes a stator including a stator core having stator teeth and stator laminations, and a rotor including a rotor shaft and a rotor magnet. The controller is configured to control an operating speed of the electric motor. The Hall effect sensor is connected to the controller and is configured to transition between a low-level output signal and a high-level output signal in response to sensing the rotor magnet. The Hall effect sensor is configured to transition between the low-level output signal and the high-level output signal at a maximum transition time of less than a millisecond.

In some aspects, the transition time of the Hall effect sensor is 40 microseconds or less.

In some aspects, a pull-up resistor for the Hall effect sensor has a resistance of 1k ohms or less.

In some aspects, the electric motor includes a bearing, the bearing including a silicon nitride ball and stainless steel races.

In some aspects, the stator laminations have a thickness of 0.2 millimeters.

In some aspects, the electric motor has a no-load operating speed of at least 37,000 RPM.

In some aspects, the power tool includes a planetary gear assembly having a gear ratio in the range of 15: 1 to 25: 1.

Power tools described herein include a housing, a battery pack interface configured to receive a battery pack, and electric motor within the housing, a controller, and a Hall effect sensor. The electric motor has a no-load operating speed of at least 40,000 rotations per minute ("RPM"). The electric motor includes a stator including a stator core having stator teeth and stator laminations, and a rotor including a rotor shaft and a rotor magnet. The controller is configured to control an operating speed of the electric motor. The Hall effect sensor is connected to the controller and is configured to transition between a low-level output signal and a high-level output signal in response to sensing the rotor magnet. The Hall effect sensor is configured to transition between the low-level output signal and the high-level output signal at a maximum transition time of less than a millisecond.

In some aspects, the transition time of the Hall effect sensor is 40 microseconds or less.

In some aspects, a pull-up resistor for the Hall effect sensor has a resistance of 1k ohms or less.

In some aspects, motor includes a bearing, the bearing including a silicon nitride ball and stainless steel races.

In some aspects, the stator laminations have a thickness of 0.2 mm.

In some aspects, the electric motor has a no-load operating speed of at least 43,000 RPM.

In some aspects, the power tool includes a planetary gear assembly having a gear ratio in the range of 15: 1 to 25: 1.

Power tools described herein include a housing, a battery pack interface configured to receive a battery pack, and electric motor within the housing, a controller, and a Hall effect sensor. The electric motor has a no-load operating speed of at least 45,000 rotations per minute ("RPM"). The electric motor includes a stator including a stator core having stator teeth and stator laminations, and a rotor including a rotor shaft and a rotor magnet. The controller is configured to control an operating speed of the electric motor. The Hall effect sensor is connected to the controller and is configured to transition between a low-level output signal and a high-level output signal in response to sensing the rotor magnet. The Hall effect sensor is configured to transition between the low-level output signal and the high-level output signal at a maximum transition time of less than a millisecond.

In some aspects, the transition time of the Hall effect sensor is 40 microseconds or less.

In some aspects, a pull-up resistor for the Hall effect sensor has a resistance of 1k ohms or less.

In some aspects, the motor includes a bearing, and the bearing including a silicon nitride ball and stainless steel races.

In some aspects, the electric motor has a no-load operating speed of at least 50,000 RPM.

In some aspects, the power tool includes a planetary gear assembly having a gear ratio in the range of 15: 1 to 25: 1.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

### BRIEF DESCRIPTION OF THE DRAWINGS

FIG. 1 illustrates a power tool incorporating a brushless DC motor.
FIG. 2 illustrates a control system for the power tool of FIG. 1, according to some embodiments.
FIGS. 3A, 3B, and 3C illustrate a self-contained rotor and internal bearing of a brushless DC motor incorporated in the power tool of FIG. 1.
FIG. 4A and 4B illustrate a recessed Hall effect sensor board mounting of the motor.
FIG. 5 illustrates a cross section of the motor.
FIG. 6 illustrates a perspective view of the motor.
FIGS. 7A,7B, and 7C illustrate a sealed air-gap of the motor.
FIG. 8 illustrates a perspective view of a stator of the motor.
FIG. 9 illustrates a graph showing rising edge time of Hall effect sensor transitions in a Hall effect sensor implementation with a strong pull-up resistor.
FIG. 10 illustrates a graph showing rising edge time of Hall effect sensor transitions in a Hall effect sensor implementation with a weak pull-up resistor.
FIG. 11 illustrates a perspective view of a gearcase of the power tool.
FIG. 12 illustrates a perspective view of the gearcase of the power tool.
FIG. 13 illustrates a perspective view of a planetary gear assembly in the gearcase of the power tool.
FIG. 14 illustrates a perspective view of the planetary gear assembly in the gearcase of the power tool.
FIG. 15A, 15B, and 15C illustrate current-torque curves, output power-torque curves, and efficiency-torque curves for a plurality of motor designs.
FIG. 16A, 16B, and 16C illustrate current-torque curves, output power-torque curves, and efficiency-torque curves for a plurality of motor designs.
FIG. 17A, 17B, and 17C illustrate current-torque curves, output power-torque curves, and efficiency-torque curves for a plurality of motor designs having various stator lamination thicknesses.
FIG. 18A, and 18B illustrate thermal curves for a stator, rotor, and coils for two variations of a first motor design under constant load.
FIG. 19A, and 19B illustrate thermal curves for a stator, rotor, and coils for two variations of a second motor design under constant load.
FIG. 20A illustrates power output and power losses at peak power input for a plurality of motor designs.
FIG. 20B illustrates peak power losses for a plurality of motor designs.
FIG. 21 illustrates no-load losses for various motor designs.
FIG. 22A, 22B, 22C, and 22D illustrate application speed and RMS current for a plurality of motor designs used in a power tool with a one-inch auger bit and a 2-9/16 inch self-feed drill bit.
FIG. 23A illustrates runtimes of a plurality of motor designs used in a power tool with a one inch auger bit and various battery packs.
FIG. 23B illustrates runtimes of a plurality of motor designs used in a power tool with a 2-9/16 inch self-feed drill bit and various battery packs.
FIG. 24A, 24B, and 24C illustrate thermal profiles of a plurality of motor designs used with a 2-9/16 inch self-feed drill bit under changing load and powered by a battery pack.
FIG. 25A, 25B, and 25C illustrate thermal profiles of a plurality of motor designs used with a 2-9/16 inch self-feed drill bit under changing load and powered by a battery pack.

### DETAILED DESCRIPTION

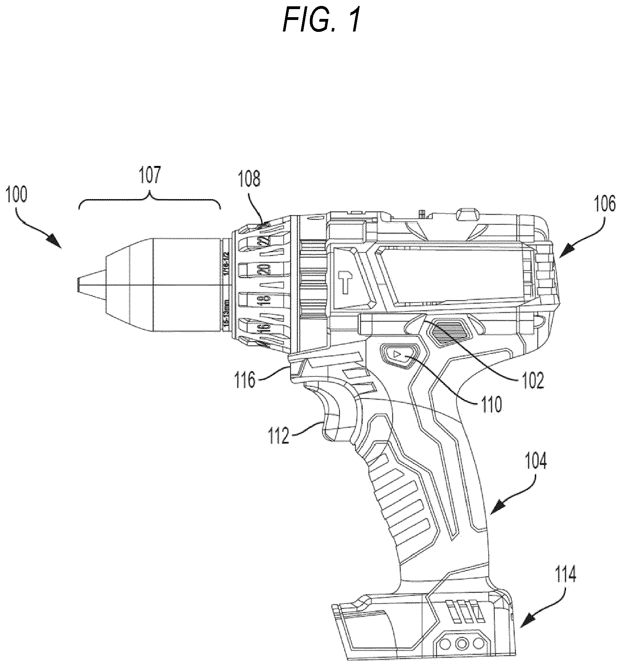

FIG. 1 illustrates a power tool 100 incorporating a brushless direct current (DC) motor. In a brushless motor power tool, such as power tool 100, switching elements are selectively enabled and disabled by control signals from a controller to selectively apply power from a power source (e.g., battery pack) to drive a brushless motor. The power tool 100 is a brushless hammer drill having a housing 102 with a handle portion 104 and motor housing portion 106. The power tool 100 further includes an output unit 107, torque setting dial 108, forward/reverse selector 110, trigger 112, battery pack interface 114, and light 116. Although FIG. 1 illustrates a hammer drill, in some embodiments, the motors described herein are incorporated into other types of power tools including drills/drivers, impact drivers, impact wrenches, circular saws, reciprocating saws, string trimmers, leaf blowers, vacuums, and the like.

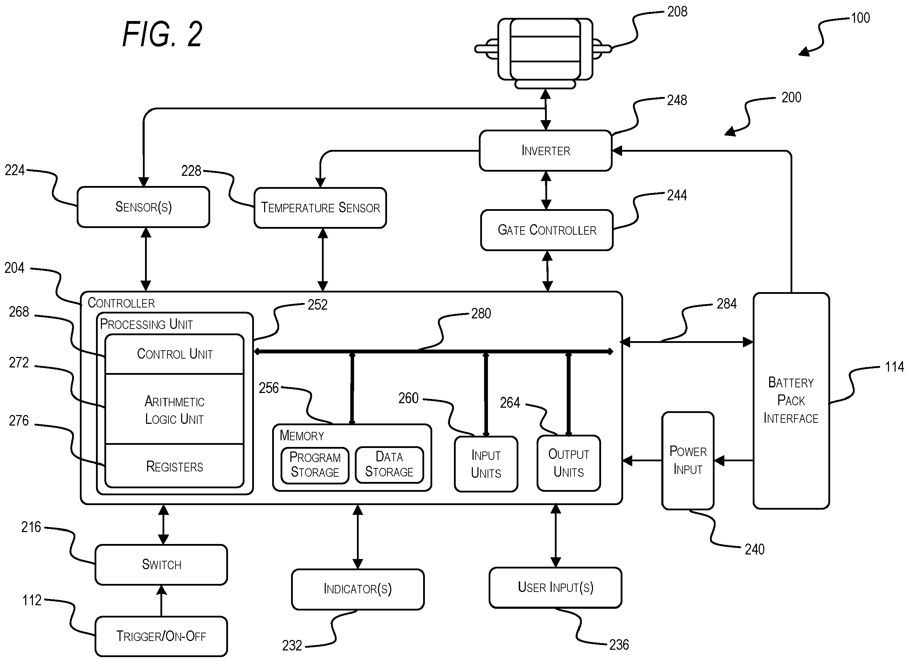

FIG. 2 illustrates a control system 200 for the power tool 100. The control system 200 includes a controller 204. The controller 204 is electrically and/or communicatively connected to a variety of modules or components of the power tool 100. For example, the illustrated controller 204 is electrically connected to a motor 208, a battery pack interface 114, a switch 216 (connected to an ON-OFF switch or trigger 112), one or more sensors 224 (e.g., a current sensor, voltage sensor, a position sensor [e.g., a Hall effect sensor], speed sensors, etc.) and a temperature sensor 228, one or more indicators 232, one or more user input modules 236, a power input module 240, and a gate controller 244 (connected to an inverter 248). The motor 208 includes a rotor, a stator, and a shaft that rotates about a longitudinal axis.

The controller 204 includes combinations of hardware and software that are operable to, among other things, control the operation of the power tool 100, monitor the operation of the power tool 100, activate the one or more indicators 232 (e.g., an LED, light 116, etc.), etc. The gate controller 244 is configured to control the inverter 248 to convert a DC power supply to phase signals for powering the phases of the motor 208. A current sensor is configured to, for example, sense a current between the inverter 248 and the motor 208. The temperature sensor 228 is configured to, for example, sense a temperature of the inverter 248 and/or motor 208.

The controller 204 includes a plurality of electrical and electronic components that provide power, operational control, and protection to the components and modules within the controller 204 and/or the power tool 100. For example, the controller 204 includes, among other things, a processing unit 252 (e.g., a microprocessor, a microcontroller, an electronic controller, an electronic processor, or another suitable programmable device), a memory 256, input units 260, and output units 264. The processing unit 252 includes, among other things, a control unit 268, an arithmetic logic unit ("ALU") 272, and a plurality of registers 276 (shown as a group of registers in FIG. 2), and is implemented using a known computer architecture (e.g., a modified Harvard architecture, a von Neumann architecture, etc.). The processing unit 252, the memory 256, the input units 260, and the output units 264, as well as the various modules or circuits connected to the controller 204 are connected by one or more control and/or data buses (e.g., common bus 280). The control and/or data buses are shown generally in FIG. 2 for illustrative purposes. The use of one or more control and/or data buses for the interconnection between and communication among the various modules, circuits, and components would be known to a person skilled in the art in view of the invention described herein.

The memory 256 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 252 is connected to the memory 256 and executes software instructions that are capable of being stored in a RAM of the memory 256 (e.g., during execution), a ROM of the memory 256 (e.g., on a generally permanent basis), or another non-transitory computer readable medium such as another memory or a disc. Software included in the implementation of the power tool 100 can be stored in the memory 256 of the controller 204. The software includes, for example, firmware, one or more applications, program data, filters, rules, one or more program modules, and other executable instructions. The controller 204 is configured to retrieve from the memory 256 and execute, among other things, instructions related to the control processes and methods described herein. In other constructions, the controller 204 includes additional, fewer, or different components.

The battery pack interface 114 includes a combination of mechanical components (e.g., rails, grooves, latches, etc.) and electrical components (e.g., one or more terminals) configured to and operable for interfacing (e.g., mechanically, electrically, and communicatively connecting) the power tool 100 with a battery pack. For example, power provided by the battery pack to the power tool is provided through the battery pack interface 114 to the power input module 240. The power input module 240 includes combinations of active and passive components to regulate or control the power received from the battery pack prior to power being provided to the controller 204. The battery pack interface 114 also supplies power to the inverter 248 to be switched by, for example, switching FETs to selectively provide power to the motor 208. The battery pack interface 114 also includes, for example, a communication line 284 to provide a communication line or link between the controller 204 and the battery pack.

The indicators 232 include, for example, one or more light-emitting diodes ("LEDs"). The indicators 232 can be configured to display conditions of, or information associated with, the power tool 100. For example, the indicators 232 are configured to indicate measured electrical characteristics of the power tool 100, the status of the device, etc. The one or more user input modules 236 may be operably coupled to the controller 204 to, for example, select a forward mode of operation or a reverse mode of operation (e.g., torque setting dial 108), a torque and/or speed setting for the power tool 100 (e.g., using torque and/or speed switches, forward/reverse selector 110, etc.), etc. In some embodiments, the one or more user input modules 236 may include a combination of digital and analog input or output devices required to achieve a desired level of operation for the nailer, such as one or more knobs, one or more dials, one or more switches, one or more buttons, etc. In some embodiments, the one or more user input modules 236 may receive signals wirelessly from a device external to the power tool 100 (e.g., a user's mobile phone).

The controller 204 may be configured to determine whether a fault condition of the power tool 100 is present and generate one or more control signals related to the fault condition. For example, the controller 204 may calculate or include, within memory 256, predetermined operational threshold values and limits for operation of the power tool 100. For example, when a potential thermal failure (e.g., of a FET, the motor 208, etc.) is detected or predicted by the controller 204, power to the motor 208 can be limited or interrupted until the potential for thermal failure is reduced. In some embodiments, the power tool 100 is configured to detect a stall condition of the motor 208. If the controller 204 detects one or more such fault conditions of the power tool 100 or determines that a fault condition of the power tool 100 no longer exists, the controller 204 may be configured to provide information and/or control signals to another component of the power tool 100 (e.g., the battery pack interface 114, the indicators 232, etc.). The signals can be configured to, for example, trip or open a fuse of the power tool, reset a switch, etc.

The temperature sensor 228 measures various temperatures of the power tool (e.g., motor, drive shaft, inverter, etc. The sensors 224 include, for example, voltage sensors, current sensors, speed sensors, position sensors, motions sensors (e.g., accelerometers, gyroscopes, inertial measurement units ["IMUs"], etc.) for detecting various other parameters of the power tool 100.

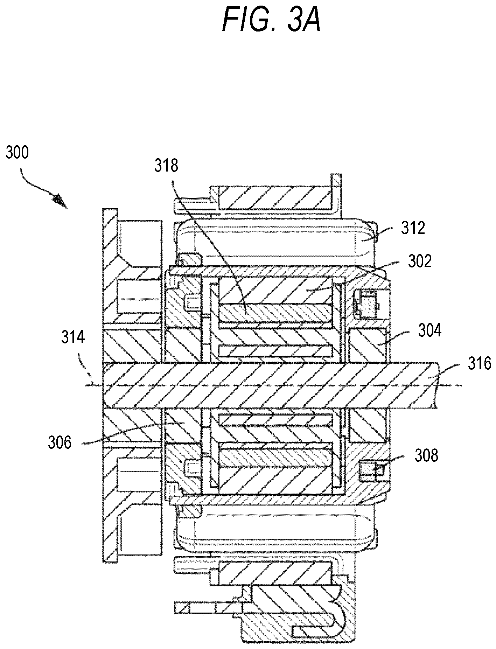

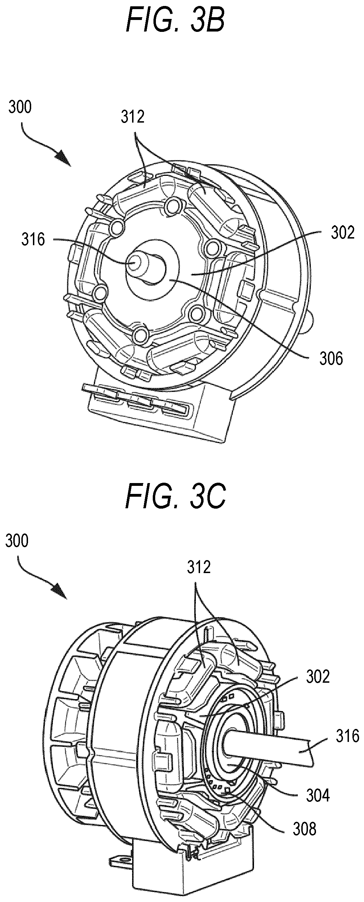

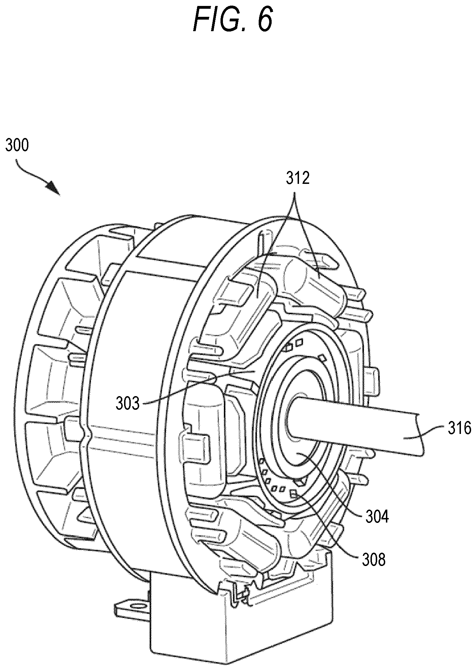

FIGS. 3A-8 illustrate a motor 300 or various portions thereof. The motor 300 is a brushless motor that serves as the motor 208 in the power tool 100. As noted, the motor 300 may also be used with other power tools, such as drills/drivers, impact drivers, and other types of power tools. As will be described in detail below, the motor 300 can include a reduced axial length, a sealed air gap, improved mounting to gear case, and improved wire routing and support.

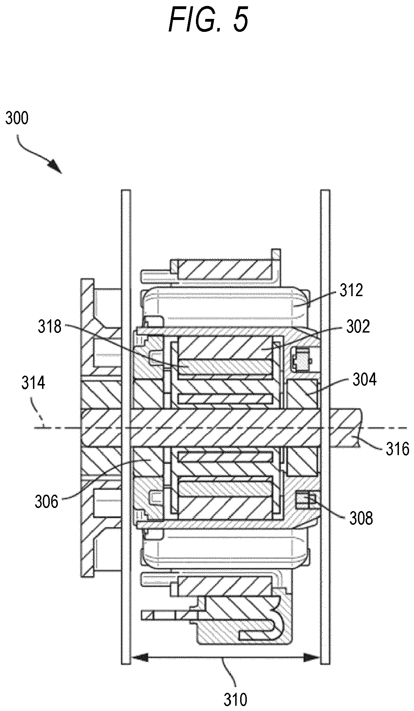

As illustrated in FIGS. 3A-6, the motor 300 includes features that can enable a reduced axial length, which allows for a smaller tool housing and/or additional space for other components within a tool housing. FIGS. 3A, 4A and 5 show cutaway views of the motor 300, and FIGS. 3B, 3C, 4B and 6 show perspective views of the motor 300. The motor 300 includes a rotor 302, a front bearing 304, a rear bearing 306 (collectively referred to as the bearings 304, 306), a position sensor board assembly 308 within a stator envelope 310 of the motor 300, and a rotor shaft 316. The stator envelope 310, as shown in FIG. 5, is the space between the ends of stator coils 312 along the length of the rotor axis 314. Recessing the rotor 302, the bearings 304, 306, and the position sensor board assembly 308 within the stator envelope 310 allows a more compact motor 300 in the axial direction. In some embodiments, the bearings 304, 306 are ceramic hybrid bearings (e.g., silicon nitride ball and stainless steel races).

Herein, the axial direction refers to the direction extending along the length (i.e., along the central axis) of the rotor shaft 316 of the motor 300, while the radial direction refers to the direction extending radially from the length (i.e., the central axis) of the rotor shaft 316. The rotor 302 is illustrated as being entirely within the stator envelope 310. In some embodiments, the bearings 304, 306 and the position sensor board assembly 308 are also entirely within the stator envelope 310. In some embodiments, the position sensor board assembly 308 is entirely within the stator envelope 310, but one or both of the bearings 304, 306 is partially inside the stator envelope 310 and partially outside the stator envelope 310. In some embodiments, the bearings 304, 306 are entirely within the stator envelope 310, but the position sensor board assembly 308 is partially inside and partially outside the stator envelope 310. In some embodiments, the position sensor board assembly 308 and one bearing (e.g., either the front bearing 304 or the rear bearing 306) are entirely within the stator envelope 310, while the other bearing (e.g., the other of the front bearing 304 or the rear bearing 306) is partially inside and partially outside the stator envelope 310.

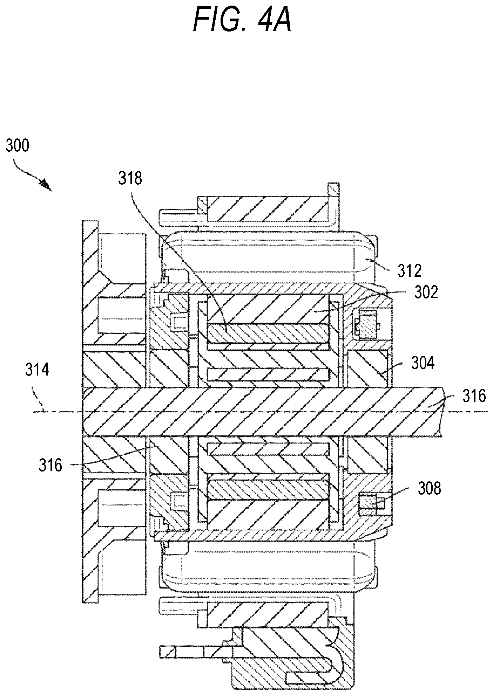

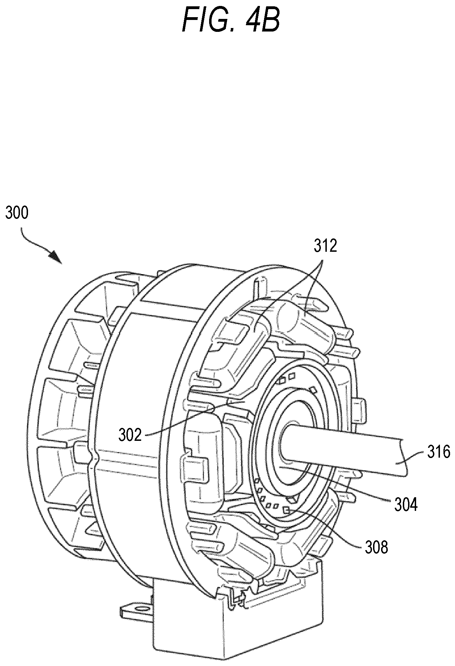

The position sensor board assembly 308 includes position sensors (e.g., Hall effect sensors) to detect one or more of the rotational position, velocity, and acceleration of the motor 300. The position sensor board assembly 308 is electrically coupled to a control PCB within the tool (not shown) having the controller 204. As shown in FIGS. 4B, 5, and 6, the position sensor board assembly 308 includes a through-hole that receives both the rotor shaft 316 and one of the motor bearings (e.g., the front bearing 304). By recessing the position sensor board assembly 308 within the stator envelope 310, rotor magnets 318 are brought into closer proximity with the position sensors, which improves detection of rotor position without extending the rotor magnets 318 and/or a rotor core 303 axially.

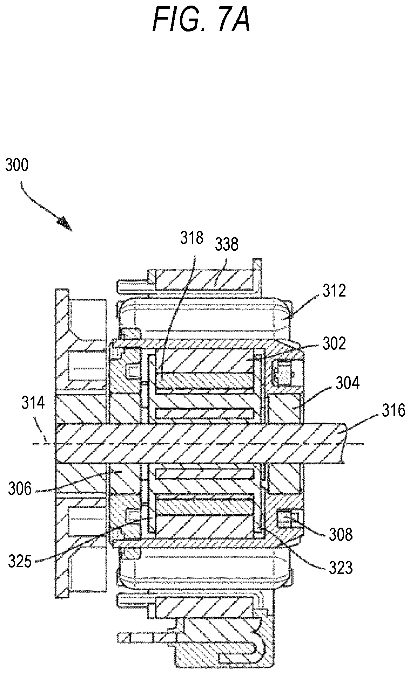

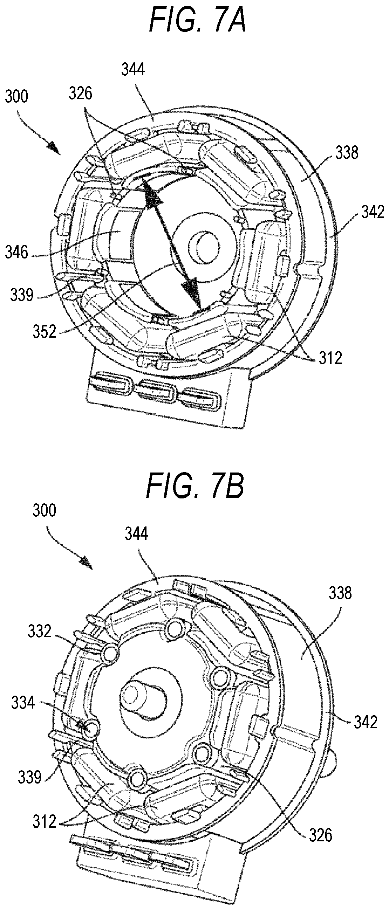

The rotor 302 may include a rotor core having rotor laminations stacked together, a front rotor end cap, and a rear rotor end cap with several legs 326 extending axially between the rotor end caps. The front rotor end cap is integrally formed with the legs 326. The rear rotor end cap includes protrusions 332, one for each leg 326, along the outer circumference. Each protrusion 332 includes a through-hole 334 for receiving an end of a corresponding leg 326 of the front rotor end cap. The legs 326 may then be cold-staked, ultrasonically welded, or otherwise joined with their corresponding protrusion 332. Each rotor end cap further includes a bearing opening in which one of the bearings 304, 306 is received. The rotor shaft 316, and, therefore, the rotor 302, is supported by the bearings 304, 306 contained within the rotor end caps. The rotor 302 may additionally include a first face portion 323 on a front end of the rotor core 303 and a second face portion 325 on a rear end of the rotor core 303. The first face portion 323 and the second face portion 325 (collectively referred to as face portions 323, 325) are entirely within a rotor enclosure. The face portions 323, 325 retain rotor magnets 318 (see FIG. 7A) in magnet receiving apertures of the rotor core 303. In some embodiments, the face portions 323, 325 are entirely within the stator envelope 310. The face portions 323, 325 may also be referred to as face plates.

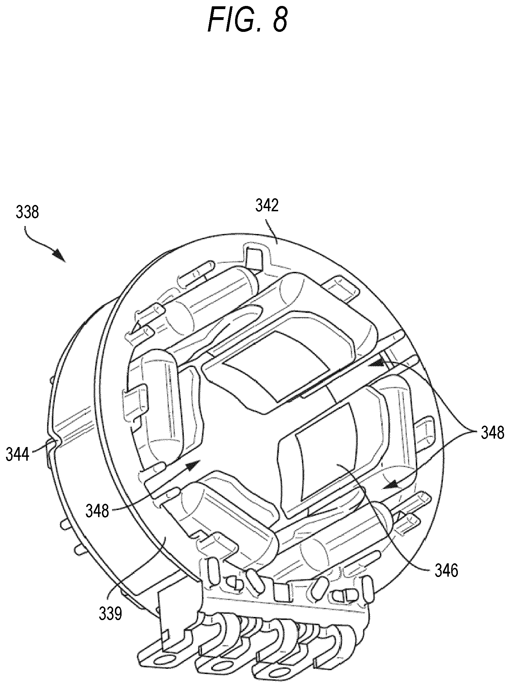

The motor 300 includes an inner rotor 302 with permanent magnets 318 and an outer stator 338 with coil windings selectively energized to drive the rotor 302. Referring to FIG. 8, the outer stator 338 includes a stator frame 339 having a first stator end cap 342 on a front side of the stator 338 and a second stator end cap 344 on a rear side of the stator 338. The first stator end cap 342 and the second stator end cap 344 may be integrally formed as a single piece (i.e., the stator frame 339) or, alternatively, may be two separate pieces that together form the stator frame 339. The stator frame 339 may be formed by an injection molding process, for example, by injecting a resin material into a mold including a stator lamination stack. Accordingly, the stator frame 339 may be a monolithic structure formed of hardened resin. The stator 338 includes stator laminations. The stator laminations and the stator frame 339 include teeth 346 around which the coils are wound. Between each tooth of stator teeth 346, at an inner radial end of the stator 338, is a gap 348, as shown in FIG. 8. As shown in FIGS. 7A-C, each leg 326 of the rotor enclosure fits and is positioned within a gap 348 between each tooth of stator teeth 346. Accordingly, the gaps 348 between stator teeth 346 are sealed. The sealed gap 348 prevents contaminants and debris from passing into the rotor area, which prevents contaminants and debris from potentially causing damage or reducing the life of the motor 300. The legs 326, rotor end caps, and the stator teeth 346, in combination, provide a sealed rotor space that protects the rotor 302 from contaminants and debris. Additionally, in some embodiments, the sealed rotor space provides a less turbulent space for rotor rotation, reducing motor vibration.

The stator frame 339, and the associated stator assembly, also includes an inner diameter 352 formed by the radially innermost ends of the stator frame 339 (see FIG. 7B). A channel having a diameter less than the inner diameter 352 of the stator frame 339 is defined within the stator frame 339. In some embodiments, the stator 338 has an outer diameter of between 40 millimeters ("mm") and 150 mm. In some embodiments, the stator 338 has an outer diameter of 50mm.

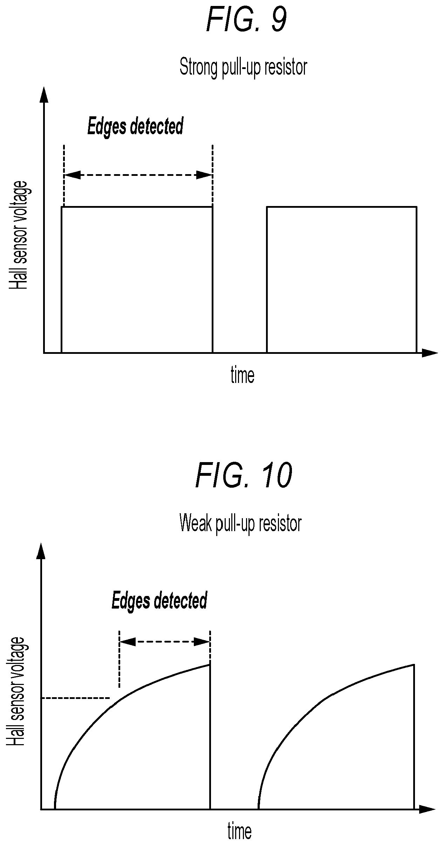

In some embodiments, the position sensors are Hall effect sensors. In such embodiments, the Hall effect sensors may be configured to generate an output signal and to transition between a low-level output signal (e.g., OFF) and a high-level output signal (e.g., ON), in response to detecting a change in a magnetic field due to a rotor magnet passing by the position sensor. The Hall effect sensors may be implemented with reduced-resistance pull-up resistors (strong pull-up resistors) to reduce rising edge time of the Hall effect sensor output signal transitions. As a result, the motor 300 can be operated at higher speeds (e.g., controlled to operate at higher speeds by the controller 204) and the controller 204 is able to process signals from the position sensors more quickly (e.g., less than one millisecond ["ms"]). FIG. 9 illustrates a strong pull-up resistor that detects Hall effect sensor transitions for a first period of time. FIG. 10 illustrates a weak pull-up resistor that detects Hall effect sensor transitions for a second period of time. A weak pull-up resistor (increased resistance resistor) elongates the rising edge time of the Hall effect sensor transitions. By reducing the rising edge time of the Hall effect sensor transition by using a strong pull-up resistor, as shown in FIG. 9, the controller 204 is able to process the signals from the position sensors more quickly.

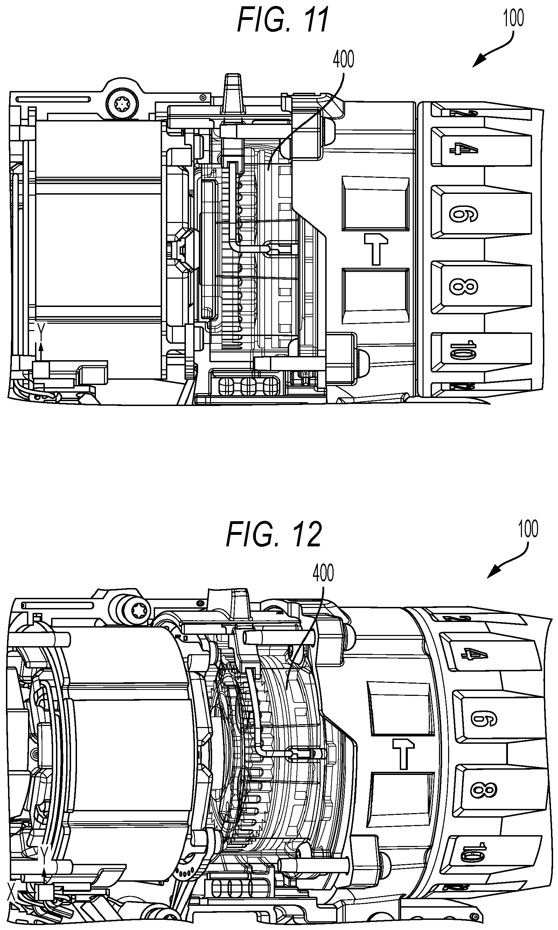

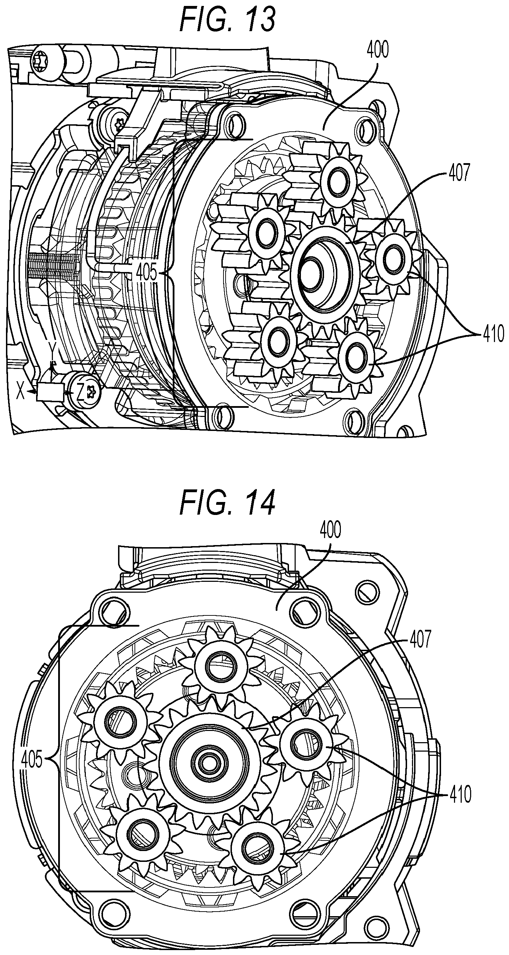

As shown in FIGS. 11-14, the motor 300 is connected to a gearcase 400. The gearcase 400 may include a planetary gear assembly 405 that includes one, two, three, or more stages. In the illustrated embodiment, the gear assembly 405 is positioned forward of the motor 300. In the embodiment shown, the gearcase 400 includes a central sun gear 407 meshed with multiple planetary gears 410. Although not shown, the planetary gears 410 may each be mounted to pins of a gear carrier configured to rotate about an axis defined by the rotor 302. The rotor 302 is connected to and configured to drive the sun gear 407. As the sun gear 407 rotates (directly driven by the rotor 302 of the motor 300), the planetary gears 410 rotate about their respective pins. In some embodiments, the planetary gears 410 orbit the sun gear 407 as the sun gear 407 rotates. In such embodiments, an output shaft connected to the gear carrier and driven by the planetary gears 410 rotates as a result of the sun gear 407 being driven by the rotor 302. The output shaft may in turn drive the output unit 107 (e.g., a chuck) of the power tool 100. In other embodiments, the gear carrier is stationary and the planetary gears 410 are consequently stationary and do not orbit the sun gear 407. In such embodiments, the rotor 302 rotates the sun gear 407, which causes the stationary planetary gears 410 to rotate. An outer ring gear connected to the planetary gears 410 then rotates to transmit torque to the output shaft and the output unit 107.

By using the planetary gear assembly 405, the speed and torque of the output shaft can be adjusted based on the size of the gears used in the gear assembly 405 and the number of teeth on each gear. Accordingly, as the sun gear 407 rotates (directly driven by the rotor shaft 316 of the motor 300), the gear carrier rotates at a comparatively lower speed, and in this way the gearcase 400 provides a torque increase and speed reduction from the rotor 302 to the output unit 107. In some embodiments, a gear ratio of 17.22: 1, 20.00: 1, or 23.6: 1 is used for a high speed mode. In some embodiments, gear ratios of 17.22:1 and 25:1 are used. In some embodiments, any gear ratio in the range of 15:1 to 25:1 is used. In some embodiments, the gear assembly 405 includes ceramic hybrid bearings (e.g., silicon nitride ball and stainless steel races) having various tolerance ratings (e.g., Annular Bearing Engineering Committee [ABEC] 1, 3, or 7).

Several embodiments of the motor 300 are described in the following paragraphs. The common operating characteristics of these motors are as follows. Each of the motors is configured with a speed slew rate of 300RPM/ms, a motor power slew rate of 2%/ms, a hardware overcurrent of 200A, a phase advance angle of 20 degrees, a field weakening minimum RPM of 5,000, a max conduction angle of 145 degrees, a conduction angle slope of 1 degree per kRPM, a minimum conduction angle of 120 degrees at max torque, a Hall effect sensor max transition time of 40 microseconds ("µs") (e.g., 1µs to 40µs), and a pull-up resistor for Hall effect sensors connected to the motor having a resistance value of 1k ohm or less (e.g., reduced from 10k ohm). These values may be modified for a desired effect. For example, it is contemplated that the speed slew rate may be adjusted to be between 200RPM/ms and 400RPM/ms, the motor power slew rate may be adjusted to be between 1%/ms and 3%/ms, the hardware overcurrent may be adjusted to be between 100A and 300A, the phase advance angle may be adjusted to be between 10 degrees and 30 degrees, the field weakening minimum RPM may be adjusted to be between 4,000 RPM and 6,000 RPM, the max conduction angle may be adjusted to be between 130 degrees and 180 degrees, the conduction angle slope may be adjusted to be between 0 degrees per kRPM to 2 degrees per kRPM, the minimum conduction angle at max torque may be adjusted to be between 100 degrees and 140 degrees, the Hall sensor max transition time may be adjusted to be between 20 µs and 60 µs, and the resistance value of the pull-up resistor for Hall effect sensors may be adjusted to be between 100 Ohm and 2k Ohm.

In a first embodiment (37k motor design), the motor 300 has a no-load speed of at least 35,000 rotations per minute ("RPM") (e.g., 37,000 RPM) and the gear assembly uses a gear ratio of 17.22:1. In this embodiment, the motor 300 includes windings including 12 turns of 17.5AWG wire on each of the stator teeth 346. In a second embodiment (43k motor design), the motor 300 has a no-load speed of at least 40,000 RPM (e.g., 43,000 RPM) and a gear assembly uses a gear ratio of 20.00:1. In this embodiment, the motor 300 includes windings including 10 turns of 17AWG wire on each tooth of stator teeth 346. In a third embodiment (50k motor design), the motor 300 has a no-load speed of at least 45,000 RPM (e.g., 50,000 RPM) and a gear assembly uses a gear ratio of 23.60:1. In this embodiment, the motor 300 includes windings including 8 turns of 16.5AWG wire on each of the stator teeth 346. The first, second, and third embodiments, may use neodymium magnets (e.g., N42M magnets) as rotor magnets 318, and the windings of the stator 338 in each embodiments may be wound with a progressive distribution, to create a uniform distribution of magnetic field and reduce torque ripple.

Each of these embodiments ("modified motor designs") of the motor 300 were tested against a control motor including a stock gear assembly using a gear ratio of 13.60:1, stock bearings, a stock motor including 18 turns of 0.9mm wiring per stator tooth in a progressive distribution patter, and N42M neodymium rotor magnets. The performance results of the three embodiments of the motor 300 are described below.

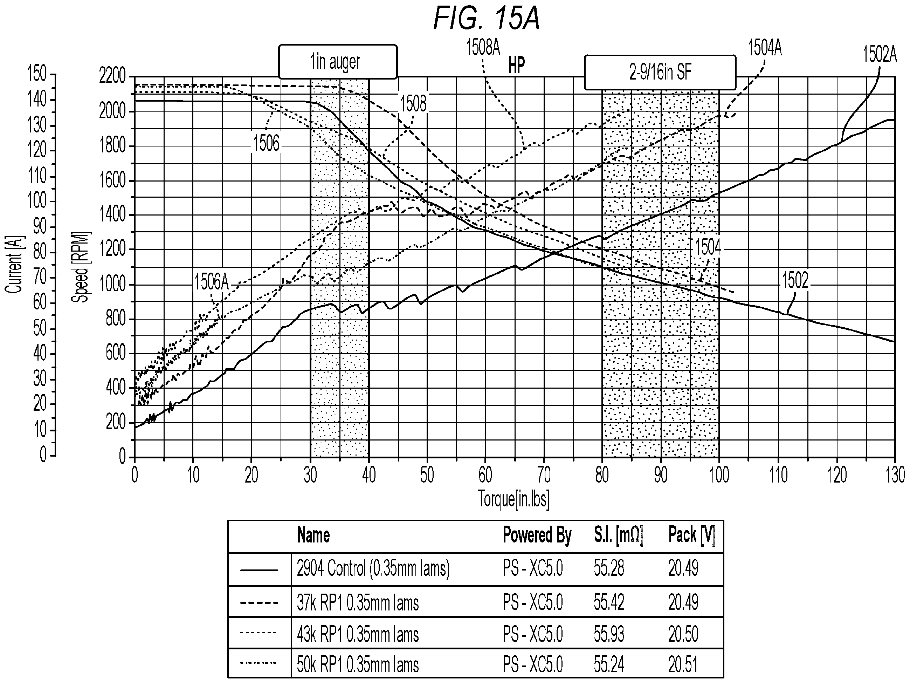

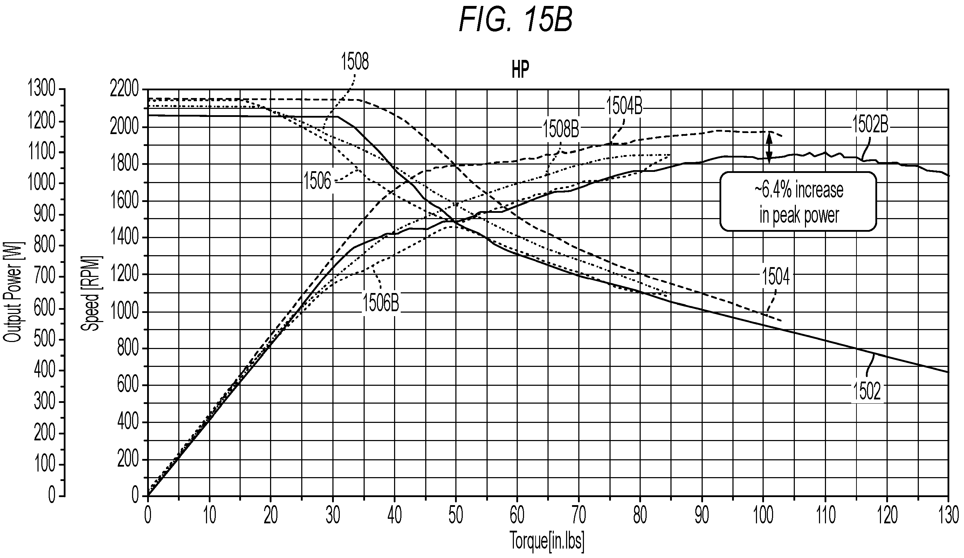

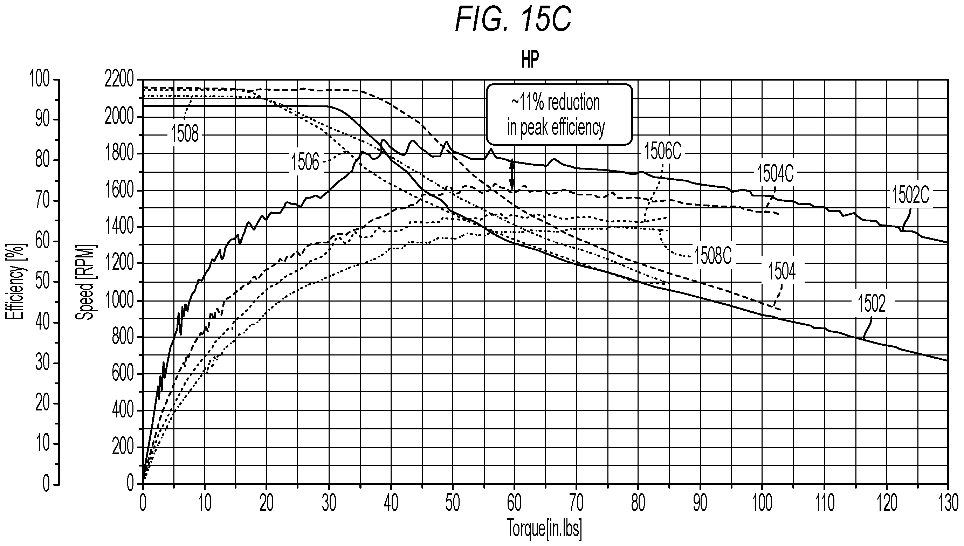

FIG. 15A, 15B, and 15C illustrate performance curves for the 37k motor design, the 43k motor design, 50k motor design, and an unmodified control motor design, with all designs having field weakening enabled. Each curve shown was created using a battery pack having a nominal voltage of 18V to power the motor 300. As will be described in further detail below, the 37k, 43k, and 50k motor designs were not able to run at constant load for as long as the unmodified control motor design. Therefore, the performance curves 1504, 1506, and 1508 of the 37k, 43k, and 50k designs run shorter than the performance curve of the unmodified control motor design.

FIG. 15A shows current-torque curves for the 37k, 43k, and 50k motor designs. Each curve was created using a battery pack having a nominal voltage of 18V to power the motor 300. The torque output of the motor designs generally decrease with an increase in speed. The motor designs may, for example, be advantageously used at high speed and low torque in a power tool 100 with one inch auger bit and be used at a high torque and low speed when using a 2-9/16 inch self-feed drill bit.

The performance curve 1504 of the 37k motor design consistently achieves higher speeds than the unmodified control motor design (shown as performance curve 1502) at similar torques. However, the performance curve 1506 of the 43k motor design, and horsepower curve 1508 of the 50k motor design achieve a higher speed to torque ratio than the unmodified control motor design at relatively low torques and relatively high torques-these designs had lower speeds than the unmodified control motor design in the 25-40 in-lbs torque range. The current-torque curves 1504A, 1506A, 1508A of the 37k, 43k, and 50k motor designs, respectively, each show that the modified motor designs draw a higher current at all torques when compared to the current-torque curve 1502A of the unmodified control motor design.

FIG. 15B shows the output power-torque curves 1504B, 1506B, 1508B of the 37k, 43k, and 50k motor designs, respectively. The output power-torque curve 1504B of the 37k motor design consistently achieves higher output powers than the unmodified control motor design (shown as output power-torque curve 1502B) at similar torques, and achieved a 6.4% increase in peak output power. However, the output power-torque curve 1506B of the 43k motor design, and output power-torque curve 1508B of the 50k motor design achieve a higher output power to torque ratio than the unmodified control motor design at relatively higher torques. Specifically, the 43k and 50k motor designs had lower power output than the unmodified control motor design in the 20-40 in-lbs torque range.

FIG. 15C shows the efficiency-torque curves 1504C, 1506C, 1508C of the 37k, 43k, and 50k motor designs, respectively. The efficiency-torque curves 1504C, 1506C, 1508C of the modified motor designs show that the modified motor designs have consistently lower efficiencies than the unmodified motor control design (shown as output power-torque curve 1502C) across all torques. However, the gap in efficiency between the unmodified control motor design and the modified motor designs narrows at higher torques. The 37k motor design saw an approximately 11% drop in peak efficiency compared to the unmodified motor control design.

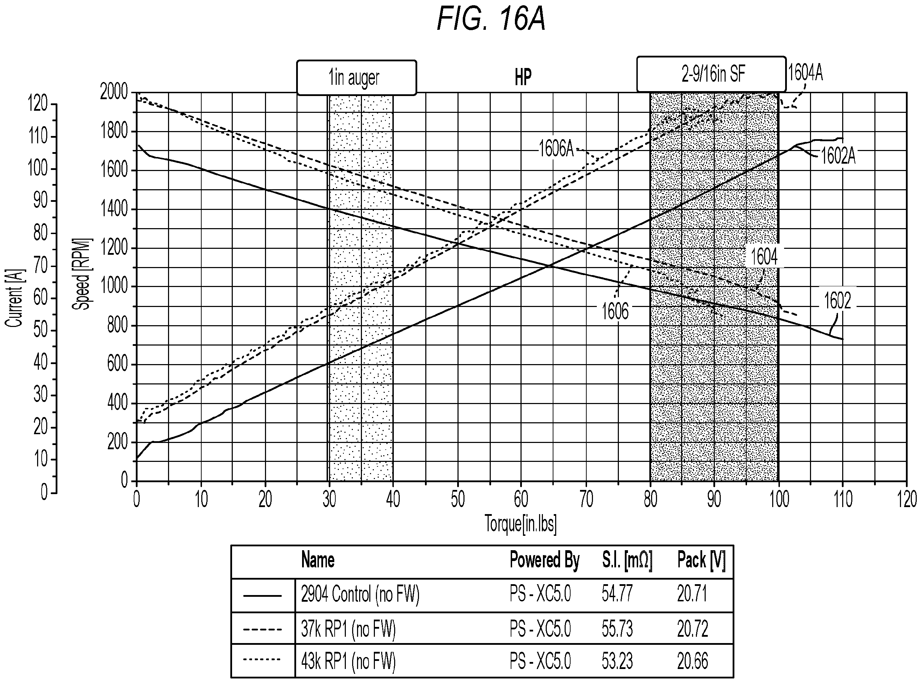

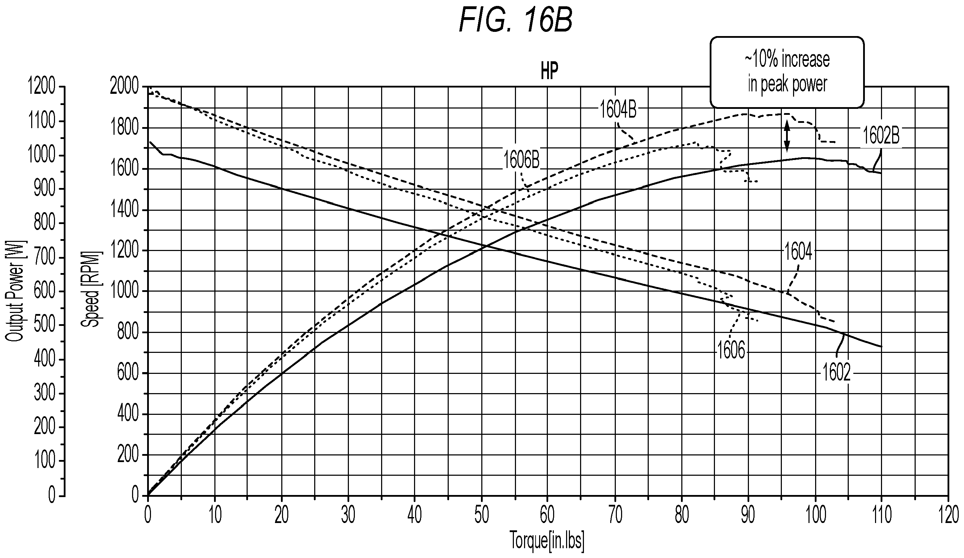

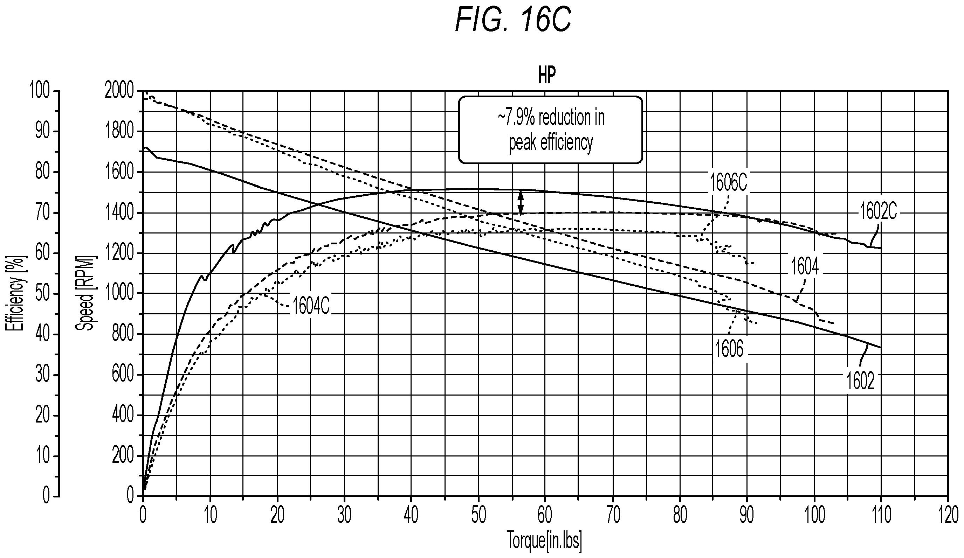

FIG. 16A, 16B, and 16C illustrate performance curves, for the 37k motor design, the 43k motor design, 50k motor design, and an unmodified control motor design, all designs with field weakening disabled. Each curve was created using a battery pack having a nominal voltage of 18V to power the motor 300.

FIG. 16A shows current-torque curves for the 37k and 43k motor designs. The torque output of the motor 300 generally increases linearly as speed decreases for each of the performance curves 1602, 1604, and 1606 corresponding respectively to the unmodified control motor design, the 37k motor design, and 43k motor design. The performance curves 1604 and 1606 of the 37k and 43k motor designs consistently achieve higher speeds than the unmodified control motor design at similar torques. The current-torque curves 1604A and 1606A of the 37k and 43k motor designs each show that the modified motor designs draw a higher current at all torques when compared to the current-torque curve 1602A of the unmodified control motor design.

FIG. 16B shows the current-torque curves 1602B, 1604B, and 1606B of the unmodified control motor design, the 37k motor design, and the 43k motor design, respectively. The output power-torque curves 1604B and 1606B of the 37k and 43k motor designs consistently achieve higher output powers than the unmodified control motor design at similar torques. The 37k motor design achieves an approximately 10% increase in peak power compared to the unmodified control motor design.

FIG. 16C shows the efficiency-torque curves 1602C, 1604C, and 1606C of the unmodified control motor design, the 37k motor design, and the 43k motor design, respectively. The efficiency-torque curves 1604C and 1606C of the modified motor designs show that the modified motor designs have lower efficiencies than the unmodified motor control design across all torques. However, the gap in efficiency between the unmodified control motor design and the modified motor designs narrows at higher torques. Specifically, the efficiency-torque curves 1604C (37k motor design) and 1602C (unmodified control motor design) are equal around 90 in-lbs of torque. The 37k motor design sees only an approximately 7.9% decrease in in peak efficiency compared to the unmodified control motor design.

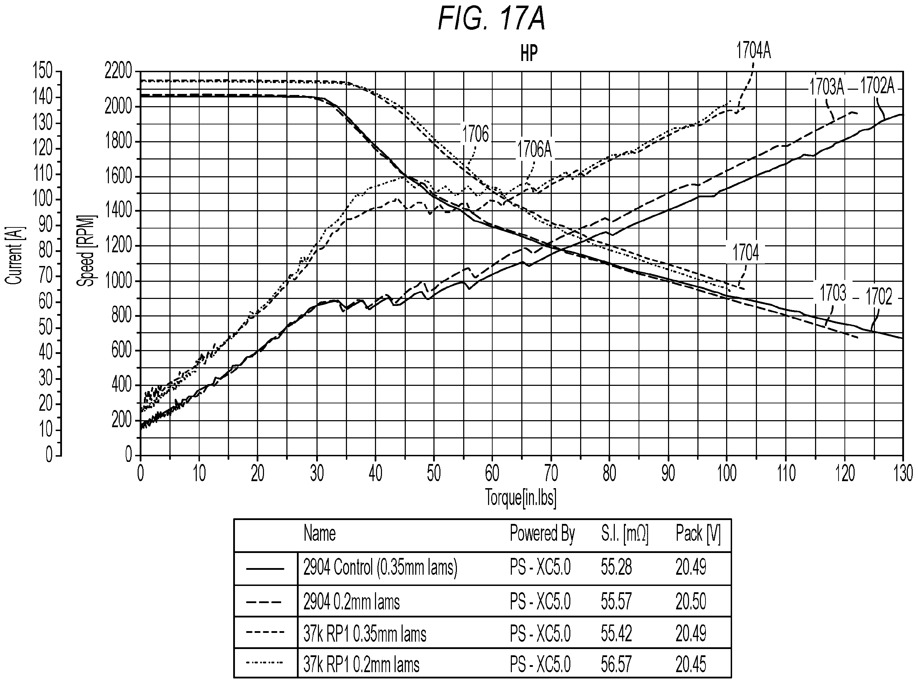

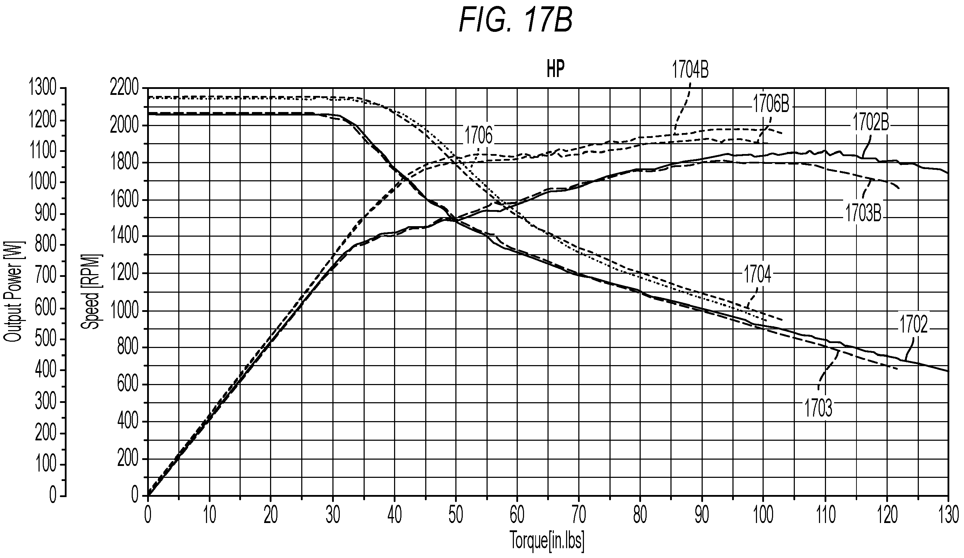

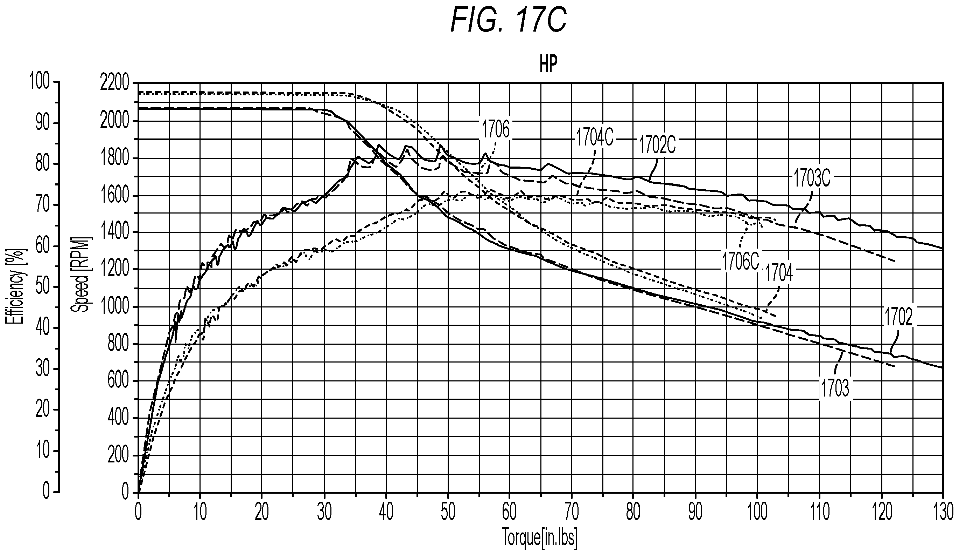

FIG. 17A, 17B, and 17C illustrate performance curves for an otherwise unmodified control motor design and for the 37k motor design, both using either a stator lamination thickness of 0.35 mm or 0.2 mm. Each curve was created using a battery pack having a nominal voltage of 18V to power the motor 300. The performance curves 1702 and 1703 show the performance of the otherwise unmodified control motor design using a lamination thickness of 0.35 mm and 0.2 mm, respectively, and the performance curves 1704 and 1706 show the performance of the 37k motor design using a lamination thickness of 0.35 mm and 0.2 mm respectively.

FIG. 17A shows current-torque curves for the 37k motor design using lamination thicknesses of 0.35 mm and 0.2 mm. The torque output of the motor 300 generally increases as speed decreases for each of the performance curves 1702 and 1703 corresponding respectively to the unmodified control motor design and each of the horsepower curves 1704 and 1706 corresponding to the 37k motor design. The current-torque curves 1704A and 1706A of the 37k motor design each show that the modified motor designs draw a higher current at all torques, regardless of lamination thickness, when compared to the current-torque curves 1702A and 1703A of the unmodified control motor design.

FIG. 17B shows the current-torque curves 1702B and 1703B of the otherwise unmodified control motor design and the current-torque curves 1704B and 1706B of the 37k design, respectively. The output power-torque curves 1704B and 1706B of the 37k motor designs consistently achieve higher output powers than the unmodified control motor design (shown as output power-torque curves 1702B and 1703B) at similar torques.

FIG. 17C shows the efficiency-torque curves 1702C and 1703C of the unmodified control motor design, and the efficiency-torque curves 1704C, and 1706C of the 37k motor design, respectively. The efficiency-torque curves 1704C and 1706C of the 37k motor design shows that the 37k motor design has consistently lower efficiencies than the unmodified motor control design across all torques, regardless of lamination thickness. However, the gap in efficiency between the unmodified control motor design and the modified motor designs narrows at higher torques. Specifically, the efficiency-torque curves 1704C (37k motor design) and 1703C (unmodified control motor design) intersect around at around 100 in-lbs of torque.

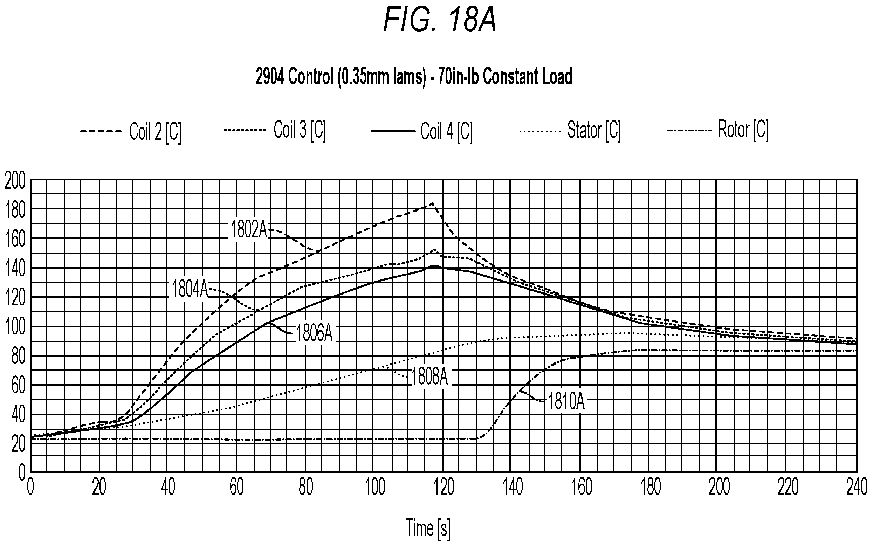

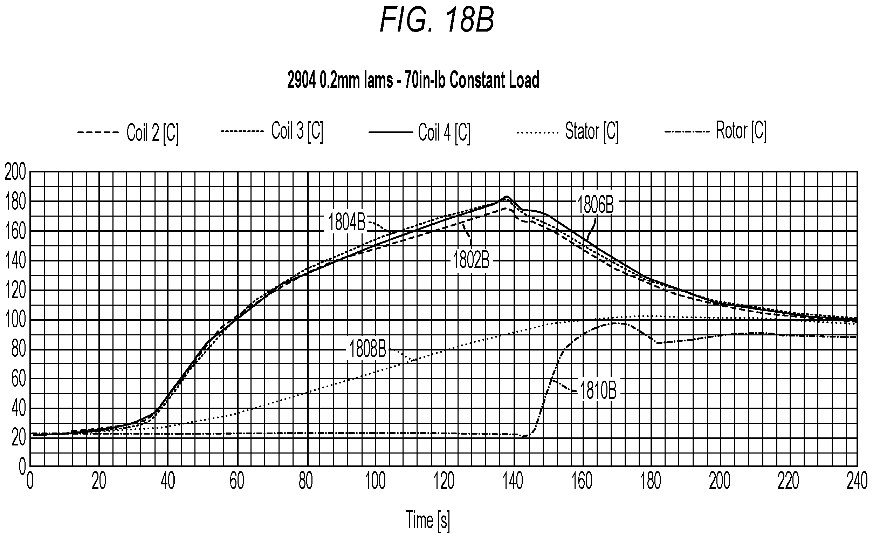

FIGS. 18A and 18B illustrate thermal curves for a stator 338, rotor 302, and coils 312 for two variations of the otherwise unmodified control motor design under a constant 70 in-lb load. The thermal curves in FIG. 18A represent the thermal performance of an otherwise unmodified control motor design using stator laminations with a thickness of 0.35mm, while the thermal curves in FIG. 18B represent the thermal performance of an otherwise unmodified control motor design using stator laminations with a thickness of 0.2mm. Both sets of thermal curves show that both variations of the motor 300 shut down around 2 minutes. Specifically, around roughly 120 seconds, the coil temperature curves 1802A, 1804A, and 1806A for coil 1, coil 2, and coil 3 of the stator 338 taper off, indicating that the motor 300 has shut down. Similarly, 1802B, 1804B, and 1806B for coil 1, coil 2, and coil 3 of the stator 338 taper off around roughly 135 seconds. In both FIG. 18A and 18B, the stator temperature curves 1808A and 1808B and the rotor temperature curves 1810A and 1810B continue heating up as the coils 312 of the stator 338 cool. However, the stator temperature curve 1808B and the rotor temperature curve 1810B of the 0.2mm lamination variation of the motor 300 rose 7 degrees Celsius higher than the stator temperature curve 1808A and the rotor temperature curve 1810A of the 0.35mm lamination variation of the motor 300.

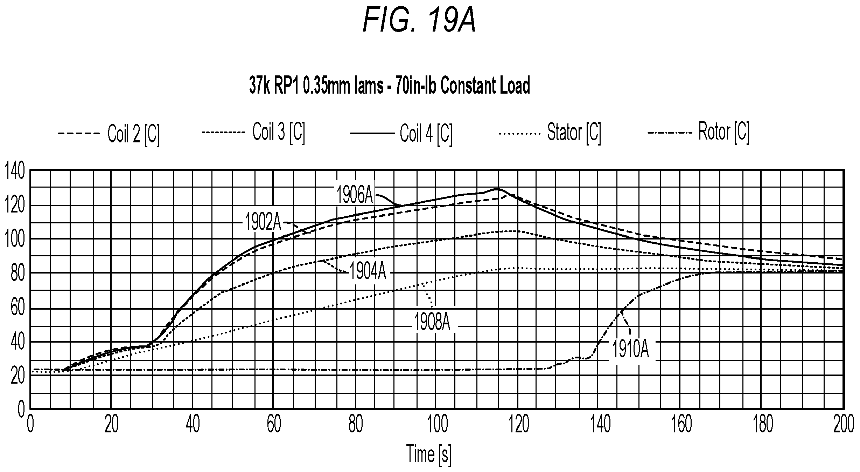

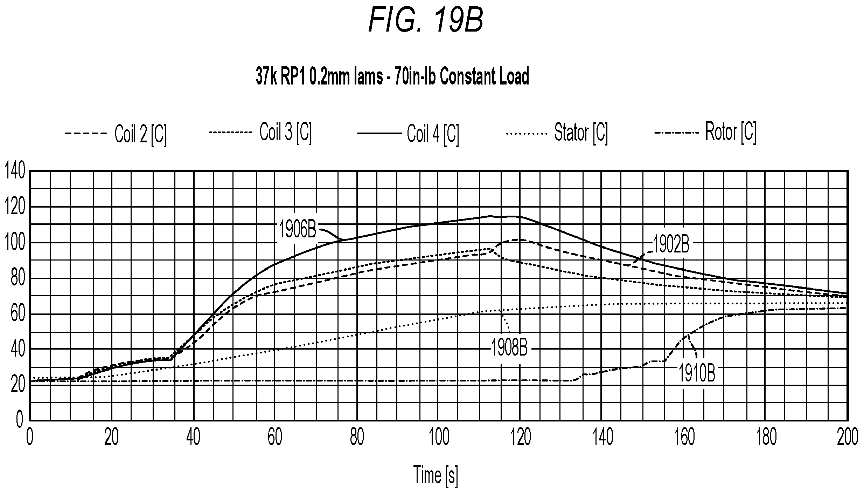

FIGS. 19A and 19B illustrate thermal curves for a stator 338, rotor 302, and coils 312 for two variations of the 37k motor design under a constant 70 in-lb load. The thermal curves in FIG. 19A represent the thermal performance of the 37k motor design using stator laminations with a thickness of 0.35mm, while the thermal curves in FIG. 18B represent the thermal performance of the 37k motor design using stator laminations with a thickness of 0.2mm. Both sets of thermal curves show that both variations of the motor 300 shut down around 2 minutes. Specifically, around roughly 120 seconds, the coil temperature curves 1902A, 1904A, and 1906A for coil 1, coil 2, and coil 3 of the stator 338 taper off, indicating that the motor 300 has shut down. Similarly, 1902B, 1904B, and 1906B for coil 1, coil 2, and coil 3 of the stator 338 also taper off around 120 seconds. In both FIG. 19A and 19B, the stator temperature curves 1908A and 1908B and the rotor temperature curves 1910A and 1910B continue heating up as the coils 312 cool. However, the stator temperature curve 1908B and the rotor temperature curve 1910B of the 0.2mm lamination variation of the motor 300 remained 19 degrees Celsius lower than the stator temperature curve 1908A and the rotor temperature curve 1910A of the 0.35mm lamination variation of the motor 300. The 37k motor design also exhibited considerably lower temperatures than the unmodified control motor designs of FIGS. 18A and 18B.

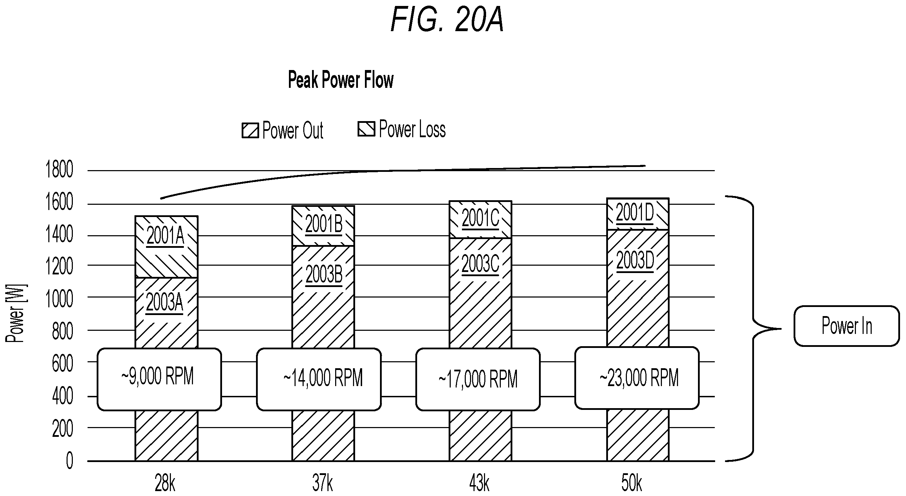

FIG. 20A illustrates power output and power losses at peak power input for a unmodified control motor design and the 37k, 43K, and 50k motor designs as bar charts. Referring to FIG. 20A, the power input for each motor design can be determined by adding the power loss portions 2001A, 2001B, 2001C, and 2001D to their corresponding power out portions 2003A, 2003B, 2003C, and 2003D. The power input for the unmodified control motor design is roughly 1500W, the power input for the 37k motor design is roughly 1570W, the power input for the 43k motor design is roughly 1600W, and the power input for the 50k motor design is roughly 1630W. The bar charts indicate that, generally, the higher the no-load RPM of the motor design, the higher the power input required for that motor design. However, the higher the no-load speed of the motor design, the lower the power losses and the more constant the power requirements.

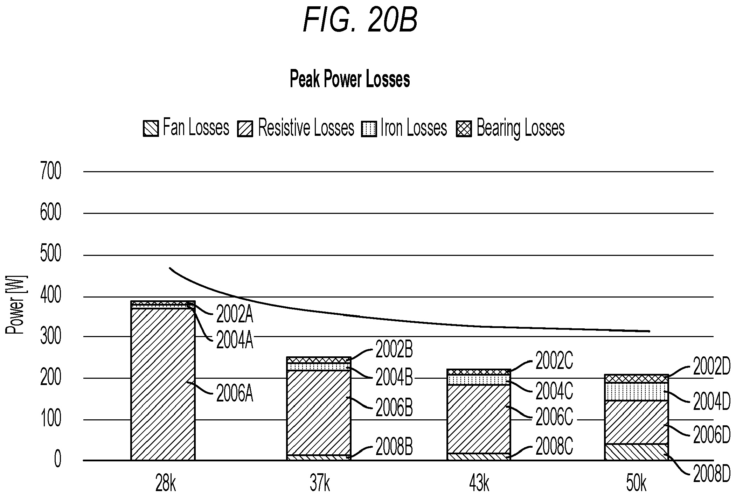

FIG. 20B illustrates peak power losses for the unmodified control motor design and the 37k, 43K, and 50k motor designs as bar charts. The bearing losses (e.g., due to friction and heat in the bearings 304, 306) 2002A, 2002B, 2002C, and 2002D, the iron losses (e.g., due to hysteresis, eddy currents, etc., in the laminations of the stator 338) 2004A, 2004B, 2004C, and 2004D of the unmodified control motor design, the 37k motor design, the 43k motor design, and the 50k motor design, respectively, increase as the no-load speed of the motor design increases. Similarly, the fan losses (e.g., due to air drag on the fan) 2008B, 2008C, and 2008D of the 37k motor design, the 43k motor design, and the 50k motor design, respectively, increase as the speed of the motor design increases. Fan losses were negligible on the unmodified control motor design. However, the resistive loses (e.g., due to electrical resistance) 2006A, 2006B, 2006C, and 2006D of the motor designs decrease as the speed of the respective motor design increases.

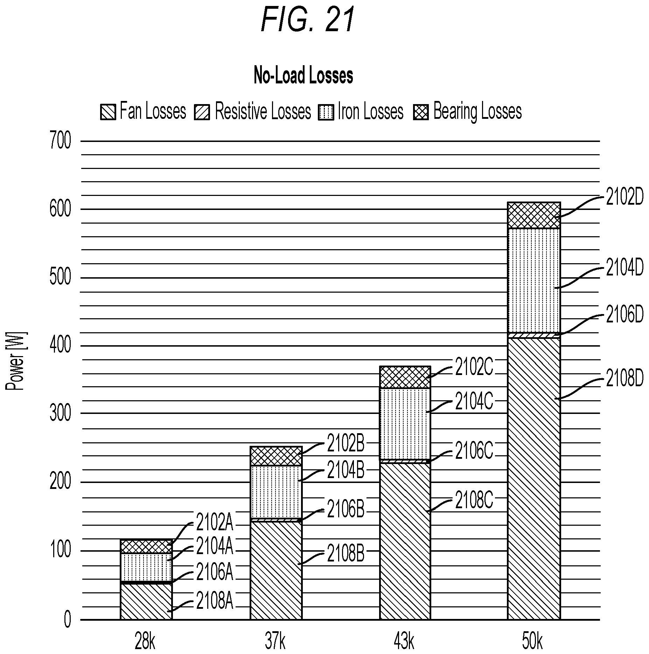

FIG. 21 illustrates no-load losses for the unmodified control, 37k, 43K, and 50k motor designs as bar charts. The bearing losses 2102A, 2102B, 2102C, and 2102D, the iron losses 2104A, 2104B, 2104C, and 2104D, the resistive losses 2106A, 2106B, 2106C, and 2106D, and the fan losses 2108A, 2108B, 2108C, and 2108D of the unmodified control motor design, 37k motor design, the 43k motor design, and the 50k motor design, respectively, all increase as the no-load speed of the motor design increases.

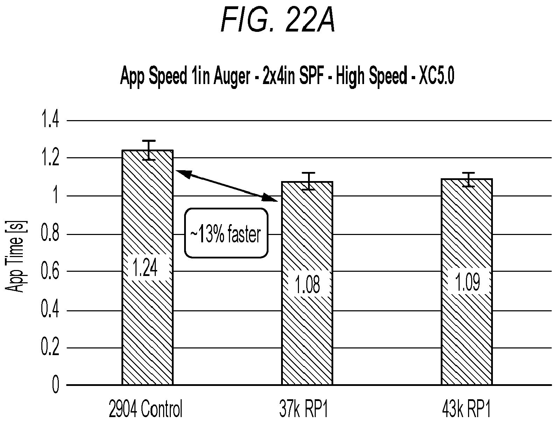

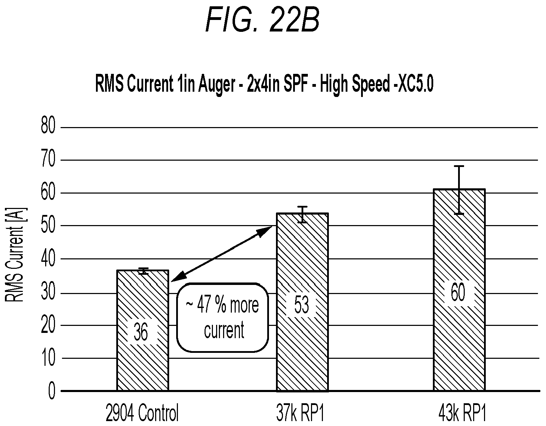

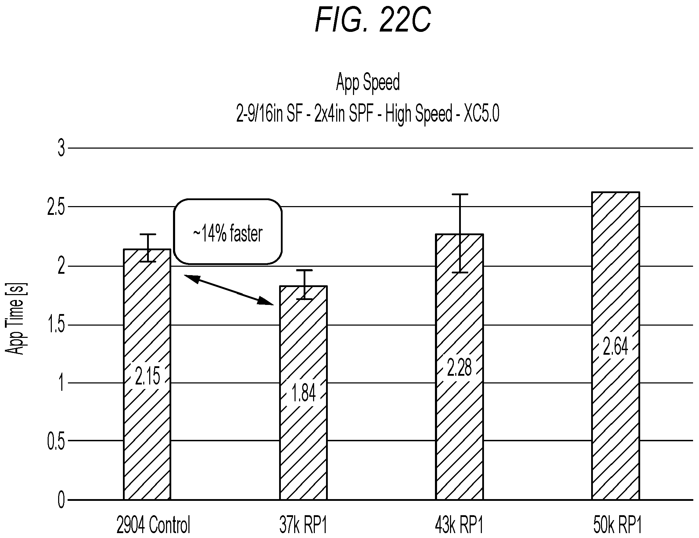

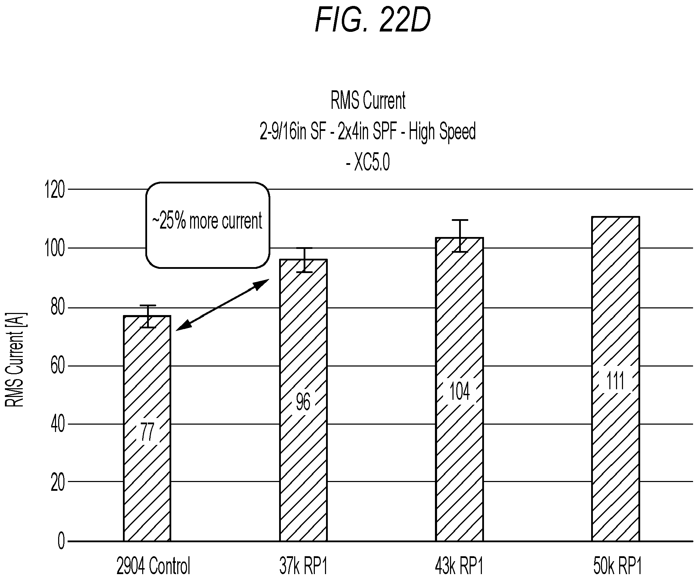

FIGS. 22A and 22B illustrate application speed and RMS current for the unmodified control, 37k, and 43K motor designs when powered by an 18V battery back to drill through a 2x4 spruce-pine-fir (SPF) workpiece with a 1in auger bit. FIGS. 22C and 22D illustrate application speed and RMS current for the unmodified control, 37k, 43K, and 50k motor designs when powered by an 18V battery pack to drill through a 2x4 SPF workpiece with a 2-9/16in self-feed drill bit.

Referring to FIG. 22A, the application speeds of the 37k and 43k motor designs are both roughly 13% faster than the application time of the unmodified control motor design. Specifically, the unmodified control motor design had an application time of 1.24 seconds while the application times of the 37k and 43k motor designs were 1.08 seconds and 1.09 seconds, respectively. Referring to FIG. 22B, the RMS current of the 37k motor design (when used in a power tool 100 powered by an 18V battery pack to drill through a 2x4 SPF workpiece with a one inch auger bit) was 47% higher than the RMS current of the unmodified control motor design while performing the same task, and the RMS current of the 43k motor design was 67% higher than the unmodified control motor design while performing the same task. Specifically, the RMS current of the unmodified control motor design was 36A, while the RMS currents of the 37k and 43k motor designs were 53A and 60A, respectively.

Referring to FIG. 22C, the application speed of the 37k motor design was roughly 14% faster than the application time of the unmodified control motor design. Specifically, the unmodified control motor design had an application time of 2.15 seconds while the application time of the 37k motor design was 1.84 seconds. However, the application speeds of the 43k and 50k motor designs were slightly slower than the application speed of the unmodified control motor design. Specifically, the 43k motor design was 6% percent slower with an application speed of 2.28 seconds and the 50k motor design was 23% slower with an application speed of 2.64 seconds. Referring to FIG. 22D, the RMS current of the 37k motor design (when used in a power tool 100 powered by an 18V battery pack to drill through a 2x4 SPF workpiece with a 2-9/16 inch self-feed drill bit) was 25% higher than the RMS current of the unmodified control motor design while performing the same task. The RMS current of the 43k motor design for the same task was 35% higher than the unmodified control motor design, and the RMS current of the 50k motor design was 44% higher. Specifically, the RMS current of the unmodified control motor design was 77A, while the RMS currents of the 37k, 43k, and 50k motor designs were 96A, 104A, and 111A respectively.

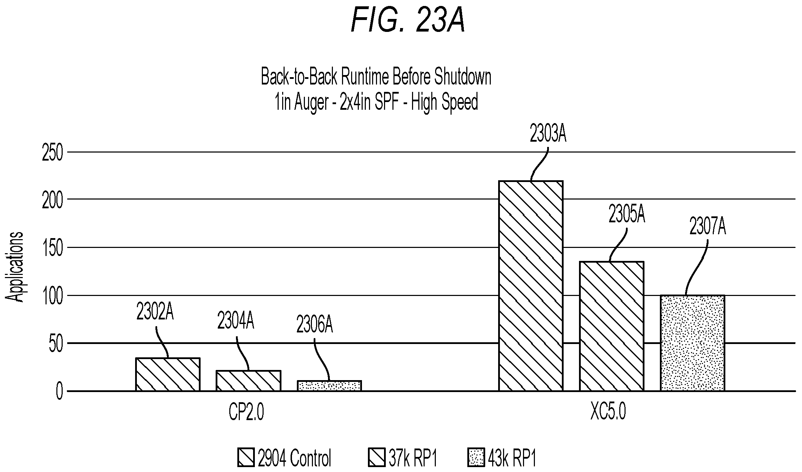

FIG. 23A illustrates runtimes of the unmodified control, 37k, and 43k motor designs used in power tool 100 with a one-inch auger bit and 18V battery packs having 2.0Ah and 5.0Ah ratings on a 2x4in SPF workpiece. Each motor design was run until it shut down due to battery pack limits. In most cases, testing found that faster motor speeds generally resulted in reduced battery thermal endurance but improved motor thermal endurance. Specifically, the 2.0Ah runtime 2302A and the 5.0Ah runtime 2303A of the unmodified control motor design are longer than the 2.0Ah runtime 2304A and the 5.0Ah runtime 2305A of the 37k motor design, which reached its battery limits (e.g., current or temperature exceeding a maximum threshold) in a relatively shorter amount of time. Likewise, the 2.0Ah runtime 2306A and the 5.0Ah runtime 2307A of the 43k motor design are shorter than the runtimes of the unmodified control motor design for similar reasons.

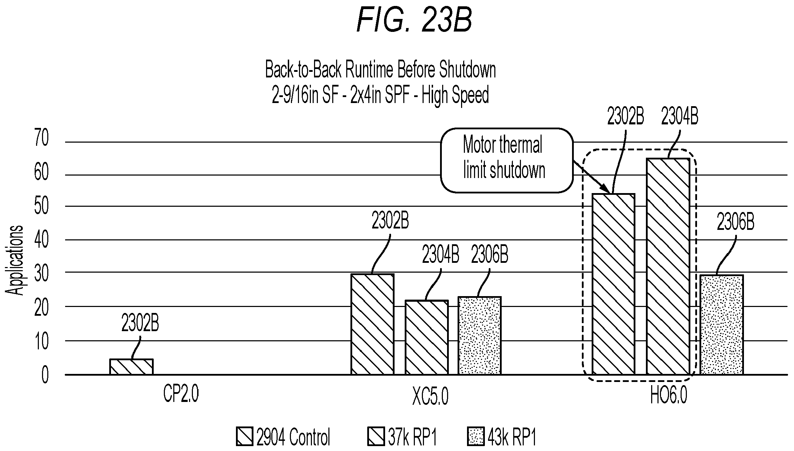

FIG. 23B illustrates runtimes of the unmodified control, 37k, and 43k motor designs used in power tool 100 with a 2-9/16in self-feed drill bit with 18V battery packs having 2.0Ah, 5.0Ah, and 6.0Ah ratings on a 2x4in SPF workpiece. The bars 2301B, 2302B, and 2303B are each associated with the unmodified control motor design, the bars 2304B and 2305B are associated with the 37k motor design, and the bars 2306B and 2307B are associated with the 43k motor design. Each of the bars 2301B, 2302B, 2303B, 2304B, 2305B, 2306B, and 2307B represents a motor design being run until it shut down due to battery limits, except for in the case of the bars 2303B and 2305B representing the unmodified control motor design and the 37k motor design powered by a 6.0Ah battery, which shut down for other reasons. Excluding the bars 2303B and 2305B from consideration, each of the motor designs ran for comparatively shorter periods of time as their top speed increased. An exception to this observation is the case of bar 2304B when compared to bar 2306B.

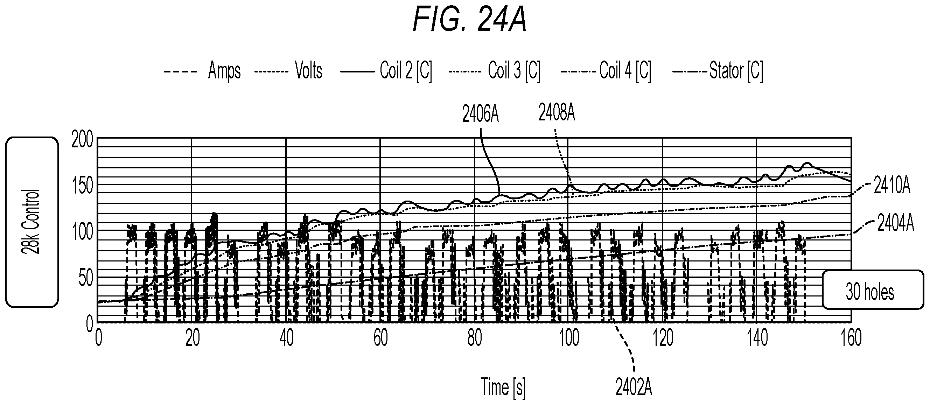

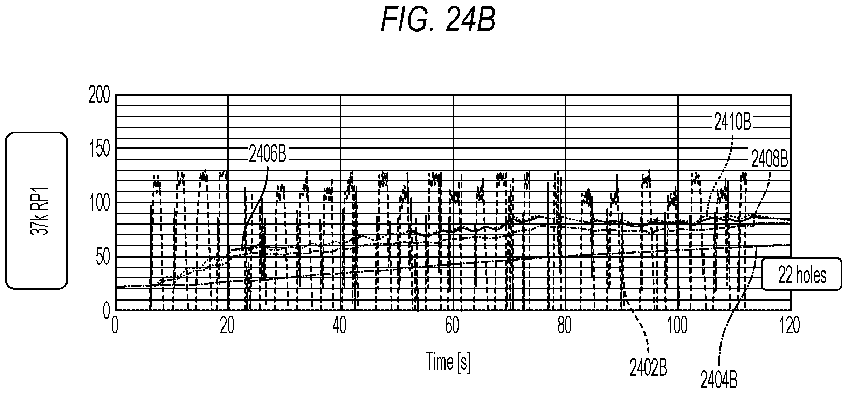

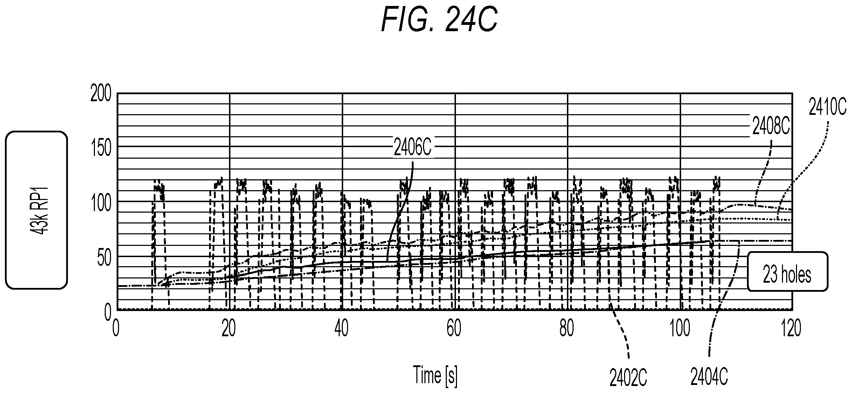

FIGS. 24A, 24B, and 24C illustrate thermal profiles for the unmodified control, 37k, and 43K motor designs in a power tool 100 using a self-feed drill bit and powered by an 18V 5.0Ah battery pack. In each of the profiles shown, the motor design was tested until the battery failed due to its temperature exceeding a max temperature threshold. Each profile used the same fan and venting.

Curves 2402A, 2402B, and 2402C show current increases resulting from a current drawn by the unmodified control, 37k. and 43k motor designs, respectively, when applied to a 2x4in SPF workpiece. Curves 2406A, 2408A, 2410A, 2406B, 2408B, 2410B, 2406C, 2408C, and 2410C indicate the temperatures of the coils 312 of the stator 338, while curves 2404A, 2404B, 2404C indicates the temperature of the stator 338 itself.

The coils 312 of the 37k and 43k motor designs ran cooler for longer than the coils 312 of the unmodified control motor design. Specifically, curves 2406B, 2408B, 2410B, 2406C, 2408C, and 2410C (corresponding to the 37k and 43k motor designs) are all, on average, around 50-60 degrees Celsius cooler than the curves 2406A, 2408A, 2410A of the unmodified control motor design around the 20 hole mark (around the 100 second mark in each profile). This indicates that increasing the speed of the motor design extends the thermal capability of the motor 300 merely at the expense of increased battery thermals.

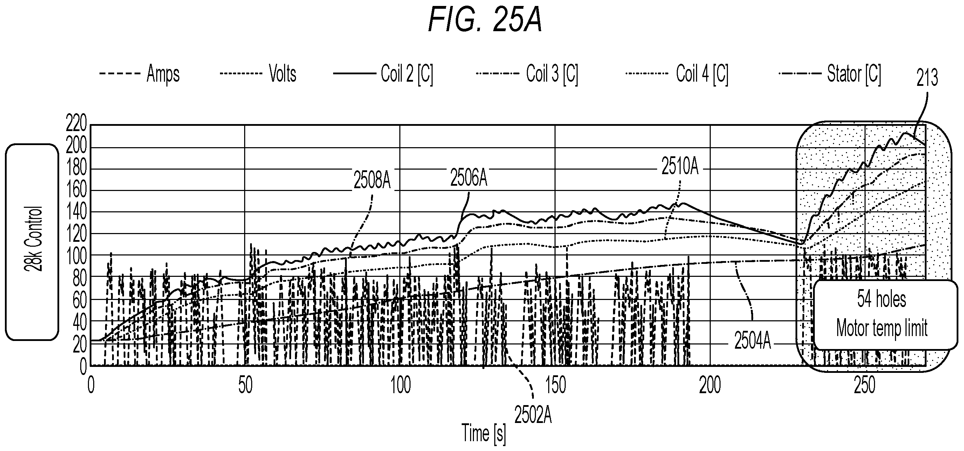

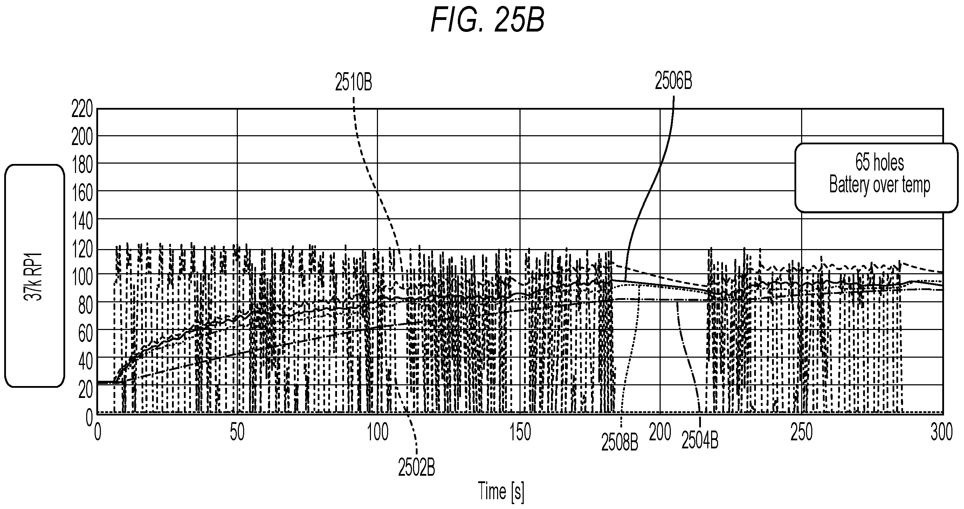

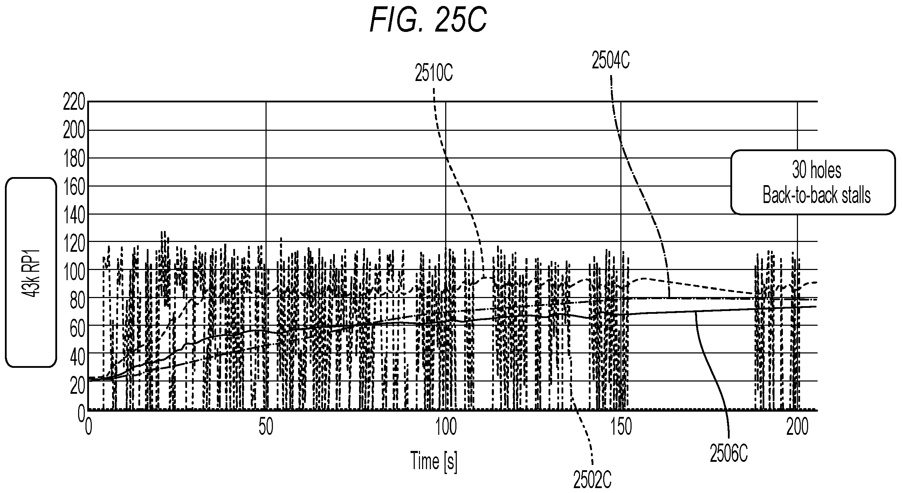

FIG. 25A, 25B, and 25C illustrate thermal profiles for the unmodified control, 37k, and 43K motor designs in the power tool 100 using a self-feed drill bit and powered by an 18V 6.0Ah battery pack. The unmodified control was run until the motor 300 reached its temperature limit, the 37k motor design was run until battery pack failure due to its temperature exceeding a max temperature threshold, while the 43k motor design was run until stalling prevented further data collection. Each profile used the same fan and venting.

Curves 2502A, 2502B, and 2502C show current increases resulting from an increase in current drawn by the unmodified control, 37k, and 43k motor designs, respectively, when applied to a 2x4in SPF workpiece. Curves 2506A, 2508A, 2510A, 2506B, 2508B, 2510B, 2506C, and 2510C indicate the temperatures of the coils 312 of the stator 338, while curves 2504A, 2504B, and 2504C indicate the temperature of the stator 338 itself.

The coils 312 of the 37k and 43k motor designs ran cooler for longer than the coils 312 of the unmodified control motor design. Specifically, curves 2506B, 2508B, 2510B, 2506C, and 2510C (corresponding to the 37k and 43k motor designs) are all, on average, around 40-50 degrees Celsius cooler than the curves 2506A, 2508A, 2510A of the unmodified control motor design around the 150 second mark in each profile. This indicates that there is a tradeoff in the motor designs. Specifically, this indicates that increasing the speed of the motor design extends the thermal capability of the motor 300 at the expense of increased issues with battery thermals.

### REPRESENTATIVE FEATURES

Representative features are set out in the following clauses, which stand alone or may be combined, in any combination, with one or more features disclosed in the text and/or drawings of the specification.

Clause 1. A power tool including: a housing; a battery pack interface configured to receive a battery pack; an electric motor within the housing, the electric motor having a no-load operating speed of at least 35,000 rotations per minute ("RPM"), the electric motor including: a stator including a stator core having stator teeth and stator laminations, and a rotor including a rotor shaft and a rotor magnet; a controller configured to control an operating speed of the electric motor; and a Hall effect sensor connected to the controller and configured to transition between a low-level output signal to a high-level output signal in response to sensing the rotor magnet, wherein the Hall effect sensor is configured to transition between the low-level output signal and the high-level output signal at a maximum transition time of less than a millisecond.

Clause 2. The power tool of clause 1, wherein the transition time of the Hall effect sensor is 40 microseconds or less.

Clause 3. The power tool of any preceding clause, wherein a pull-up resistor for the Hall effect sensor has a resistance of 1k ohms or less.

Clause 4. The power tool of any preceding clause, wherein the electric motor includes a bearing, the bearing including a silicon nitride ball and stainless steel races.

Clause 5. The power tool of clause 4, wherein the stator laminations have a thickness of 0.2 millimeters.

Clause 6. The power tool of any preceding clause, wherein the electric motor has a no-load operating speed of at least 37,000 RPM.

Clause 7. The power tool of any preceding clause, wherein the power tool includes a planetary gear assembly having a gear ratio in the range of 15:1 to 25:1.

Clause 8. A power tool including: a housing; a battery pack interface configured to receive a battery pack; an electric motor within the housing, the electric motor having a no-load operating speed of at least 40,000 rotations per minute ("RPM"), the electric motor including: a stator including a stator core having stator teeth and stator laminations, and a rotor including a rotor shaft and a rotor magnet; a controller connected to the electric motor, the controller configured to control an operating speed of the motor; and a Hall effect sensor connected to the controller and configured to transition between a low-level output signal to a high-level output signal in response to sensing the rotor magnet, wherein the Hall effect sensor is configured to transition between the low-level output signal and the high-level output signal at a maximum transition time of less than a millisecond.

Clause 9. The power tool of clause 8, wherein the transition time of the Hall effect sensor is 40 microseconds or less.

Clause 10. The power tool of clauses 8 or 9, wherein a pull-up resistor for the Hall effect sensor has a resistance of 1k ohms or less.

Clause 11. The power tool of any of clauses 8 to 10, wherein the electric motor includes a bearing, the bearing including a silicon nitride ball and stainless steel races.

Clause 12. The power tool of clause 11, wherein the stator laminations have a thickness of 0.2 millimeters.

Clause 13. The power tool of any of clauses 8 to 12, wherein the electric motor has a no-load operating speed of at least 43,000 RPM.

Clause 14. The power tool of any of clauses 8 to 13, wherein the power tool includes a planetary gear assembly having a gear ratio in the range of 15:1 to 25:1.

Clause 15. A power tool including: a housing; a battery pack interface configured to receive a battery pack; an electric motor within the housing, the electric motor having a no-load operating speed of at least 45,000 rotations per minute ("RPM"), the electric motor including: a stator including a stator core having stator teeth and stator laminations, and a rotor including a rotor shaft and a rotor magnet; a controller connected to the electric motor, the controller configured to control an operating speed of the motor; and, a Hall effect sensor connected to the controller and configured to transition between a low-level output signal to a high-level output signal and in response to sensing the rotor magnet, wherein the Hall effect sensor is configured to transition between the low-level output signal and the high-level output signal at a max transition time of less than a millisecond.

Clause 16. The power tool of clause 15, wherein the transition time of the Hall effect sensor is 40 microseconds or less.

Clause 17. The power tool of any of clauses 15 or 16, wherein a pull-up resistor for the Hall effect sensor has a resistance of 1k ohms or less.

Clause 18. The power tool of any of clauses 15 to 17, wherein the electric motor includes a bearing, the bearing including a silicon nitride ball and stainless steel races.

Clause 19. The power tool of any of clauses 15 to 18, wherein the electric motor has a no-load operating speed of at least 50,000 RPM.

Clause 20. The power tool of any of clauses 15 to 19, wherein the power tool includes a planetary gear assembly having a gear ratio in the range of 15:1 to 25:1.

Thus, embodiments described herein provide, among other things, a power tool including a high speed motor. Various features and advantages are set forth in the following claims.

## Claims

1. A power tool including:
a housing;
a battery pack interface configured to receive a battery pack;
an electric motor within the housing, the electric motor having a no-load operating speed of at least 35,000 rotations per minute ("RPM"), the electric motor including:
a stator including a stator core having stator teeth and stator laminations, and
a rotor including a rotor shaft and a rotor magnet;
a controller configured to control an operating speed of the electric motor; and
a Hall effect sensor connected to the controller and configured to transition between a low-level output signal to a high-level output signal in response to sensing the rotor magnet,
wherein the Hall effect sensor is configured to transition between the low-level output signal and the high-level output signal at a maximum transition time of less than a millisecond.

2. The power tool of claim 1, wherein the maximum transition time of the Hall effect sensor is 40 microseconds or less.

3. The power tool of claim 2, wherein a pull-up resistor for the Hall effect sensor has a resistance of 1k ohms or less.

4. The power tool of claim 2, wherein the electric motor includes a bearing, the bearing including a silicon nitride ball and stainless steel races.

5. The power tool of claim 4, wherein the stator laminations have a thickness of 0.2 millimeters.

6. The power tool of claim 2, wherein the electric motor has a no-load operating speed of at least 37,000 RPM.

7. The power tool of claim 2, wherein the power tool includes a planetary gear assembly having a gear ratio in a range of 15:1 to 25:1.

8. The power tool of claim 1, wherein the electric motor has a no-load operating speed of at least 40,000 rotations per minute ("RPM").

9. The power tool of claim 8, wherein a pull-up resistor for the Hall effect sensor has a resistance of 1k ohms or less.

10. The power tool of claim 9, wherein the electric motor includes a bearing, the bearing including a silicon nitride ball and stainless steel races.

11. The power tool of claim 9, wherein the electric motor has a no-load operating speed of at least 43,000 RPM.

12. The power tool of claim 1, wherein the electric motor has a no-load operating speed of at least 45,000 rotations per minute ("RPM").

13. The power tool of claim 12, wherein a pull-up resistor for the Hall effect sensor has a resistance of 1k ohms or less.

14. The power tool of claim 13, wherein the electric motor includes a bearing, the bearing including a silicon nitride ball and stainless steel races.

15. The power tool of claim 12, wherein the electric motor has a no-load operating speed of at least 50,000 RPM.
